(19) Europäisches Patentamt
European Patent Office
Office européen des brevets

(11) **EP 4 640 039 A1**

(12) **EUROPÄISCHE PATENTANMELDUNG**

(43) Veröffentlichungstag:
**29.10.2025 Patentblatt 2025/44**

(21) Anmeldenummer: **24172595.1**

(22) Anmeldetag: **26.04.2024**

(51) Internationale Patentklassifikation (IPC):
***A01F 15/08*** *(2006.01)*

(52) Gemeinsame Patentklassifikation (CPC):
**A01F 15/0841; A01F 15/0825**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder:
• **GUIET, LIONEL**
**68163 Mannheim (DE)**
• **PERROTIN, FREDERIC**
**68163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **KOMBINATION, VERFAHREN ZUM BETREIBEN EINER KOMBINATION UND BALLENPRESSE**

(57) Die Erfindung betrifft eine Zugfahrzeug-Ballenpressen-Kombination, umfassend ein Zugfahrzeug (12) und eine Ballenpresse (10), wobei das Zugfahrzeug (12) einen Antriebsstrang (80) zum Antrieb des Zugfahrzeugs (12) und eine Zapfwelleneinheit (112) umfasst, und die Ballenpresse eine Aufnahmeeinheit (20) und eine Presseinheit (22) umfasst. Die Kombination (1) umfasst eine Steuereinheit (104), die mit der Zapfwelleneinheit (112) verbunden ist, wobei die Zapfwelleneinheit (112) mit der Ballenpresse (10) zum Antreiben der Presseinheit (22) und der Aufnahmeeinheit (20) mechanisch verbunden ist, und die Presseinheit (22) mit einem ersten Energiewert und die Aufnahmeeinheit (20) mit einem zweiten Energiewert antreibbar sind. Die Steuereinheit (104) ist konfiguriert, ein Energieverbrauchssignal oder ein Zapfwellenverbrauchssignal zu empfangen oder zu ermitteln, und mit dem Energieverbrauchssignal oder dem Zapfwellenverbrauchssignal einen Gesamtenergiewert zu ermitteln. Die Steuereinheit (104) ist weiter konfiguriert ist, den Gesamtenergiewert mit einem Ballenpressenverbrauchswert zu vergleichen, und mit einem ersten Stellsignal die Zapfwelleneinheit (112) einzustellen und/oder zu verstellen, wenn der Gesamtenergiewert vom Ballenpressenverbrauchswert verschieden ist. Die Erfindung betrifft weiter ein Verfahren zum Betreiben der Kombination (1) sowie eine Ballenpresse (10).

FIG. 1

EP 4 640 039 A1

**Beschreibung**

Die Erfindung betrifft eine Ballenpresse gemäss dem Oberbegriff des unabhängigen Anspruchs 1 und ein Verfahren zum Betreiben einer Kombination gemäss dem Oberbegriff des unabhängigen Anspruchs 13 und eine Ballenpresse gemäss dem Oberbegriff des unabhängigen Anspruchs 14.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presseinheit umfassen. Die Presseinheit kann eine Presskammer mit einem oder mehreren Pressmittel umfassen, beispielsweise Rollen oder einen Riemen oder einen Gurt oder eine Kettenanordnung oder ein Band. Die Presseinheit kann das von der Aufnahmeeinheit aufgenommene Erntegut aufnehmen und zu einem Ballen formen oder pressen. Die Ballenpresse kann ausserdem eine Fördereinheit umfassen. Das von der Aufnahmeeinheit aufgenommene Erntegut kann mit der Fördereinheit, beispielsweise einem Rotor, in Presseinheit, insbesondere die Presskammer geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presseinheit wird der Ballen, insbesondere der Rundballen oder der Quaderballen, geformt. Der fertig geformte Ballen kann im Anschluss, insbesondere in der Presskammer, mit einem Wickelmaterial, beispielsweise Netz, Folie oder Bindegarn, umwickelt werden. Der fertig geformte Ballen oder der fertig umwickelte Ballen, kann über eine Auswurfeinheit, beispielsweise eine Auswurfklappe oder ein Heckteil oder eine Heckklappe der Ballenpresse, insbesondere über die mit einer Auswurfeinheit versehene Presseinheit oder Presskammer, entladen oder ausgeworfen werden. Die Aufnahmeeinheit, insbesondere die Pick-up, kann antreibbar sein, um Erntegut aufzunehmen. Die Presseinheit, insbesondere die Presskammer und/oder das oder die Pressmittel, können antreibbar sein, um einen Ballen innerhalb der Presskammer zu formen oder zu pressen.

Die Ballenpresse kann Teil einer Kombination mit einem Zugfahrzeug sein. Die Ballenpresse kann mit dem Zugfahrzeug mit einer Leistung und/oder Energie und/oder einer Kraft und/oder einem Drehmoment und/oder einer Drehzahl antreibbar sein. Die Leistung und/oder Energie und/oder Kraft und/oder das Drehmoment und/oder die Drehzahl kann vom Zugfahrzeug an die Ballenpresse, insbesondere an die Presseinheit und/oder die Aufnahmeeinheit, übertragbar und/oder verteilbar sein. Nachteil der bekannten Ballenpresse ist, dass es von der Erfahrung des Bedieners der Ballenpresse oder der Zugfahrzeugs bzw. einer Kombination abhängt, zu verstehen, ob sich der Energiebedarf am Maximum, also der Gesamtenergie befindet oder nicht.

Der vorliegenden Erfindung liegt daher die Aufgabe zugrunde eine Kombination und ein Verfahren zum Betreiben einer Kombination und eine Ballenpresse vorzuschlagen, durch welche die vorgenannten Probleme überwunden werden. Insbesondere sollen eine Ballenpresse, eine Kombination und ein Verfahren zum Betreiben einer Kombination vorgeschlagen werden, die es ermöglichen automatisch und/oder dem Bediener eine Überlast- und/oder Unterlastsituation zu vermeiden bzw. bessere Entscheidungen hinsichtlich einer möglicherweise drohenden Überlastsituation zu treffen.

Diese Aufgabe wird durch eine Kombination mit den Merkmalen des Anspruchs 1 und ein Verfahren mit den Merkmalen des Anspruchs 13 und eine Ballenpresse mit den Merkmalen des Anspruchs 14 gelöst. Die abhängigen Ansprüche beziehen sich auf besonders vorteilhafte Ausführungsformen der Erfindung.

Erfindungsgemäss wird eine Zugfahrzeug-Ballenpressen-Kombination vorgeschlagen. Die Zugfahrzeug-Ballenpressen-Kombination umfasst ein Zugfahrzeug und eine Ballenpresse. Das Zugfahrzeug umfasst eine Zapfwelleneinheit. Das Zugfahrzeug kann einen Antriebsstrang zum Antrieb oder Antreiben des Zugfahrzeugs, insbesondere der Zugfahrzeug-Ballenpressen-Kombination, umfassen. Die Ballenpresse umfasst eine Aufnahmeeinheit, zum Aufnehmen eines Ernteguts vom Boden und zur Zufuhr des Ernteguts in eine Presseinheit. Die Ballenpresse umfasst weiter die Presseinheit, zum Aufnehmen des Ernteguts von der Aufnahmeeinheit und zum Pressen oder Formen eines Ballens. Die Kombination umfasst eine Steuereinheit, die mit der Zapfwelleneinheit verbunden ist, bevorzugt signalverbunden und/oder wirkend gekoppelt und/oder signalübertragend und/oder datenleitend verbunden ist. Die Steuereinheit kann mit dem Antriebsstrang verbunden sein, bevorzugt signalverbunden und/oder wirkend gekoppelt und/oder signalübertragend und/oder datenleitend verbunden ist. Die Zapfwelleneinheit ist mit der Ballenpresse zum Antreiben der Presseinheit und der Aufnahmeeinheit mechanisch verbunden. Die Presseinheit ist mit einem ersten Energiewert und die Aufnahmeeinheit mit einem zweiten Energiewert antreibbar. Die Steuereinheit ist konfiguriert, ein Energieverbrauchssignal oder ein Zapfwellenverbrauchssignal zu empfangen oder zu ermitteln, und mit dem Energieverbrauchssignal oder dem Zapfwellenverbrauchssignal einen Gesamtenergiewert zu ermitteln. Die Steuereinheit ist weiter konfiguriert, den Gesamtenergiewert mit einem Ballenpressenverbrauchswert zu vergleichen, und mit einem oder basierend auf einem ersten Stellsignal die Zapfwelleneinheit einzustellen und/oder zu verstellen, wenn der Gesamtenergiewert vom Ballenpressenverbrauchswert verschieden ist.

Die Steuereinheit kann bevorzugt als eine integrierte oder gemeinsame Steuereinheit der Kombination ausgebildet sein. Die Steuereinheit kann auf oder an oder im Zugfahrzeug oder der Ballenpresse angeordnet sein. Die Steuereinheit kann insbesondere konfiguriert sein, ein erstes Stellsignal zum Einstellen und/oder Verstellen der Zapfwelleneinheit zu versenden, insbesondere an die Zapfwelleneinheit, und mit dem ersten Stellsignal die Zapfwelleneinheit einzustellen und/oder zu verstellen, wenn der Gesamtenergiewert vom Ballenpressenverbrauchswert verschieden ist.

Die Steuereinheit kann eine Ballenpressensteuereinheit und eine Zugfahrzeugsteuereinheit umfassen. Die Ballenpressensteuereinheit und die Zugfahrzeugsteuereinheit können verbunden, bevorzugt signalverbunden und/oder wirkend gekoppelt und/oder signalübertragend und/oder datenleitend verbunden sein. Die Steuereinheit oder die Zugfahrzeugsteuereinheit kann konfiguriert sein, die Zapfwelleneinheit, bevorzugt die erste Energiemaschine oder den Elektromotor, mit dem oder in Abhängigkeit vom ersten Stellsignal einzustellen und/oder zu verstellen, um insbesondere mit dem oder in Abhängigkeit vom ersten Stellsignal den Gesamtenergiewert einzustellen und/oder zu verstellen, insbesondere zu erhöhen oder zu verringern. Die Steuereinheit oder die Zugfahrzeugsteuereinheit kann konfiguriert sein, die Energie und/oder das Drehmoment und/oder die Kraft und/oder die Drehzahl der Zapfwelleneinheit, bevorzugt die erste Energiemaschine oder den Elektromotor, mit dem oder in Abhängigkeit vom ersten Stellsignal einzustellen und/oder zu verstellen, insbesondere zu erhöhen oder zu verringern. Die Ballenpresse kann die Ballenpressensteuereinheit (anstatt der Steuereinheit). umfassen. Die Ballenpressensteuereinheit kann an oder auf oder in der Ballenpresse angeordnet sein. Die Ballenpressensteuereinheit kann mit der Aufnahmeeinheit und der Presseinheit verbunden sein (anstatt mit der Steuereinheit).

Die Ballenpressensteuereinheit kann konfiguriert sein, das Energieverbrauchssignal oder ein Zapfwellenverbrauchssignal zu empfangen, insbesondere von der Zugfahrzeugsteuereinheit, und mit dem empfangenen Signal einen Gesamtenergiewert zu ermitteln. Die Ballenpressensteuereinheit kann weiter konfiguriert sein, den Gesamtenergiewert mit einem Ballenpressenverbrauchswert zu vergleichen, und ein erstes Stellsignal zum Einstellen und/oder Verstellen der Zapfwelleneinheit, insbesondere an die Zugfahrzeugsteuereinheit zu versenden, wenn der Gesamtenergiewert vom Ballenpressenverbrauchswert verschieden ist. Das Zugfahrzeug kann die Zugfahrzeugsteuereinheit (anstatt der Steuereinheit) umfassen. Die Zugfahrzeugsteuereinheit kann an oder auf oder im Zugfahrzeug angeordnet sein, insbesondere befestigt oder befestigbar sein. Die Zugfahrzeugsteuereinheit kann mit der Zapfwelleneinheit verbunden sein. Alternativ oder zusätzlich kann die Zugfahrzeugsteuereinheit mit dem Antriebsstrang verbunden sein. Die Zugfahrzeugsteuereinheit kann konfiguriert sein, ein Energieverbrauchssignal oder ein Zapfwellenverbrauchssignal zu empfangen oder zu ermitteln.

Die Ballenpressensteuereinheit kann konfiguriert sein, das Energieverbrauchssignal oder das Zapfwellenverbrauchssignal von der Zugfahrzeugsteuereinheit zu empfangen. Die Ballenpressensteuereinheit kann konfiguriert sein mit dem Energieverbrauchssignal oder dem Zapfwellenverbrauchssignal den Gesamtenergiewert zu ermitteln. Die Zugfahrzeugsteuereinheit kann konfiguriert sein, das erste Stellsignal zu empfangen. Die Zugfahrzeugsteuereinheit kann konfiguriert sein, basierend auf oder mit dem ersten Stellsignal die Zapfwelleneinheit, bevorzugt die erste Energiemaschine, besonders bevorzugt den Elektromotor, einzustellen und/oder zu verstellen. Die Zugfahrzeugsteuereinheit kann konfiguriert sein, das erste Stellsignal zu empfangen, und das erste Stellsignal zum Einstellen und/oder Verstellen der Zapfwelleneinheit zu versenden, insbesondere an die Zapfwelleneinheit, bevorzugt die erste Energiemaschine, besonders bevorzugt den Elektromotor, und mit dem ersten Stellsignal die Zapfwelleneinheit, bevorzugt die erste Energiemaschine, besonders bevorzugt den Elektromotor einzustellen und/oder zu verstellen, wenn der Gesamtenergiewert vom Ballenpressenverbrauchswert verschieden ist.

Die Steuereinheit oder die Zugfahrzeugsteuereinheit kann insbesondere konfiguriert sein, mit dem ersten Stellsignal den Gesamtenergiewert, insbesondere eine Energie und/oder eine Kraft und/oder ein Drehmoment und/oder eine Drehzahl der Zapfwelleneinheit, bevorzugt der ersten Energiemaschine bzw. des Elektromotors, einzustellen und/oder zu verstellen, wenn der Gesamtenergiewert vom Ballenpressenverbrauchswert verschieden ist. Die Steuereinheit oder die Zugfahrzeugsteuereinheit kann im Speziellen konfiguriert sein, den Gesamtenergiewert derart einzustellen und/oder zu verstellen, dass der Ballenpressenverbrauchswert kleiner oder gleich dem Gesamtenergiewert ist. Mit anderen Worten, die Kombination kann mit der Steuereinheit oder die Zugfahrzeugsteuereinheit derart betreibbar sein, dass der Gesamtenergiewert mit dem Ballenpressenverbrauchswert verglichen wird, und mit oder basierend auf dem ersten Stellsignal die Zapfwelleneinheit einstellbar und/oder zu verstellbar ist, wenn der Gesamtenergiewert vom Ballenpressenverbrauchswert verschieden ist.

Unter mechanisch verbunden kann insbesondere antreibbar verbunden und/oder gekoppelt oder koppelbar bzw. mechanisch gekoppelt oder mechanisch koppelbar verstanden werden. Unter mechanisch verbunden, bevorzugt unter antreibbar verbunden und/oder gekoppelt oder koppelbar bzw. mechanisch gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Im Speziellen kann die Ballenpressensteuereinheit konfiguriert sein, das erste Stellsignal, insbesondere an die Zugfahrzeugsteuereinheit, zu versenden, wenn der Gesamtenergiewert kleiner als der Ballenpressenverbrauchswert ist. Die Steuereinheit oder die Zugfahrzeugsteuereinheit kann konfiguriert sein, mit oder basierend auf dem ersten Stellsignal den Gesamtenergiewert zu erhöhen, sodass der Ballenpressenverbrauchswert kleiner oder gleich dem Gesamtenergiewert ist. Ebenso kann die Ballenpressensteuereinheit zusätzlich oder alternativ konfiguriert sein, das erste Stellsignal, insbesondere an die Zugfahrzeugsteuereinheit, zu versenden, wenn der Gesamtenergiewert grösser als der Ballenpressenverbrauchswert ist. Die Steuereinheit oder die Zugfahrzeugsteuereinheit kann zusätzlich oder alternativ konfiguriert sein, mit oder basierend auf dem ersten Stellsignal den Gesamtenergiewert zu verringern oder zu erhöhen, wobei der Ballenpressenverbrauchswert kleiner oder gleich dem Gesamtenergiewert sein soll.

Das erste Stellsignal kann ein Signal zum Einstellen und/oder Verstellen der Zapfwelleneinheit, insbesondere einer Energie und/oder einer Kraft und/oder eines Drehmoments und/oder einer Drehzahl der Zapfwelleneinheit, bevorzugt der ersten Energiemaschine bzw. des Elektromotors, sein. Der Gesamtenergiewert und der erste und zweite Energiewert und der Ballenpressenverbrauchswert können eine Energie und/oder eine Kraft und/oder ein Drehmoment und/oder eine Drehzahl sein. Der Gesamtenergiewert kann einer aktuell der Ballenpresse zur Verfügung stehenden maximalen Energie und/oder einer maximalen Kraft und/oder einem maximalen Drehmoment und/oder einer maximalen Drehzahl entsprechen. Der Gesamtenergiewert kann entweder mit dem Energieverbrauchssignal oder dem Zapfwellenverbrauchssignal ermittelbar sein.

Der Ballenpressenverbrauchswert kann einem aktuellen Bedarf der Ballenpresse an Energie und/oder Kraft und/oder Drehmoment und/oder Drehzahl entsprechen. Der Ballenpressenverbrauchswert kann beispielsweise die Energie und/oder die Kraft und/oder das Drehmoment und/oder die Drehzahl sein, die von der Ballenpresse benötigt wird, um den Betrieb, insbesondere den aktuellen Betrieb, der Ballenpresse aufrechtzuerhalten. Der Ballenpressenverbrauchswert kann mit zunehmender Größe des sich bildenden Ballens steigen. Der Energiebedarf der Ballenpresse und somit der Ballenpressenverbrauchswert kann von der Grösse des Ballens abhängen, d.h. beispielsweise kann der Ballenpressenverbrauchswert linear oder schrittweise in Abhängigkeit von der Grösse des Ballens zunehmen.

Im Speziellen kann der erste Energiewert eine erste Energie und/oder eine erste Kraft und/oder ein erstes Drehmoment und/oder eine erste Drehzahl sein. Der zweite Energiewert kann eine zweite Energie und/oder eine zweite Kraft und/oder ein zweites Drehmoment und/oder eine zweite Drehzahl sein.

Im Speziellen kann die Ballenpressensteuereinheit konfiguriert sein, das erste Stellsignal zu versenden, wenn der Gesamtenergiewert einem oder mehreren Energiegrenzwerte relativ zum Ballenpressenverbrauchswert entspricht oder der Gesamtenergiewert bei einem oder mehreren Energiegrenzwerte relativ zum Ballenpressenverbrauchswert liegt. Die Zugfahrzeugsteuereinheit kann konfiguriert sein, das erste Stellsignal zu empfangen. Die Steuereinheit oder die Zugfahrzeugsteuereinheit kann konfiguriert sein, die Energie und/oder das Drehmoment und/oder die Kraft und/oder die Drehzahl der Zapfwelleneinheit, bevorzugt die erste Energiemaschine oder den Elektromotor, mit dem oder in Abhängigkeit vom ersten Stellsignal einzustellen und/oder zu verstellen, insbesondere zu erhöhen oder zu verringern, wenn der Gesamtenergiewert einem oder mehreren Energiegrenzwerte relativ zum Ballenpressenverbrauchswert entspricht oder der Gesamtenergiewert bei einem oder mehreren Energiegrenzwerte relativ zum Ballenpressenverbrauchswert liegt. Dabei kann der Energiegrenzwert oder können die Energiegrenzwerte kleiner und/oder gleich oder grösser und/oder gleich dem Ballenpressenverbrauchswert sein.

Die Steuereinheit oder die Zugfahrzeugsteuereinheit kann konfiguriert sein, die Energie und/oder das Drehmoment und/oder die Kraft und/oder die Drehzahl der Zapfwelleneinheit, bevorzugt der ersten Energiemaschine oder des Elektromotors, mit dem oder in Abhängigkeit vom ersten Stellsignal zu erhöhen, wenn der Gesamtenergiewert kleiner oder gleich dem Energiegrenzwert ist und der Energiegrenzwert kleiner oder gleich dem Ballenpressenverbrauchswert ist oder wenn der Gesamtenergiewert grösser oder gleich dem Ballenpressenverbrauchswert, aber kleiner als der Energiegrenzwert ist. Der Gesamtenergiewert kann dabei erhöht werden, bis dieser grösser oder gleich dem oder den Energiegrenzwert(en) ist.

Alternativ oder zusätzlich kann die Steuereinheit oder die Zugfahrzeugsteuereinheit konfiguriert sein, die Energie und/oder das Drehmoment und/oder die Kraft und/oder die Drehzahl der Zapfwelleneinheit, bevorzugt der erste Energiemaschine oder des Elektromotors, mit dem oder in Abhängigkeit vom ersten Stellsignal zu verringern, wenn der Gesamtenergiewert grösser als der oder die Energiegrenzwert(e) ist und der Energiegrenzwert grösser oder gleich dem Ballenpressenverbrauchswert ist. Der Gesamtenergiewert kann dabei verringert werden, bis dieser kleiner oder gleich dem oder den Energiegrenzwert(en) ist.

Die Ballenpressensteuereinheit kann konfiguriert sein, das erste Stellsignal zu versenden, wenn der Gesamtenergiewert kleiner oder gleich dem Energiegrenzwert ist und der Energiegrenzwert kleiner oder gleich dem Ballenpressenverbrauchswert ist oder wenn der Gesamtenergiewert grösser oder gleich dem Ballenpressenverbrauchswert, aber kleiner als der Energiegrenzwert ist. Alternativ oder zusätzlich kann die Ballenpressensteuereinheit konfiguriert sein, das erste Stellsignal zu versenden, wenn der Gesamtenergiewert grösser als der oder die Energiegrenzwert(e) ist und der Energiegrenzwert grösser oder gleich dem Ballenpressenverbrauchswert ist. Die Zugfahrzeugsteuereinheit kann konfiguriert sein, das erste Stellsignal zu empfangen.

Der Energiegrenzwert kann eine Energie und/oder eine Kraft und/oder ein Drehmoment und/oder eine Drehzahl sein. Der Energiegrenzwert kann ein Grenzwert sein, der es ermöglicht das erste Stellsignal rechtzeitig zu versenden, um den Betrieb der Kombination, insbesondere der Ballenpresse aufrechtzuhalten.

Die Ballenpresse kann mit dem Zugfahrzeug mechanisch verbunden sein, insbesondere die Ballenpresse mit dem Zugfahrzeug gekoppelt sein, beispielsweise kann die Kombination das Zugfahrzeug und die mittels einer Deichsel vom Zugfahrzeug gezogenen Ballenpresse umfassen. Die Zugfahrzeugsteuereinheit kann konfiguriert sein, ein Energieverbrauchssignal oder ein Zapfwellenverbrauchssignal zu ermitteln. Die Zugfahrzeugsteuereinheit kann konfiguriert sein, das Energieverbrauchssignal oder das Zapfwellenverbrauchssignal an die Ballenpressensteuereinheit zu versenden, und die Ballenpressensteuereinheit konfiguriert ist, das Energieverbrauchssignal oder das Zapfwellenverbrauchssignal von der Zugfahrzeugsteuereinheit zu empfangen.

Das Zugfahrzeug kann ein landwirtschaftliches Zugfahrzeug sein, insbesondere ein Traktor oder ein Schlepper. Das Zugfahrzeug kann in einer Fahrtrichtung vor der Ballenpresse angeordnet sein. Das Zugfahrzeug kann die Ballenpresse ziehen. Der Antriebsstrang kann einen Motor und/oder eine Getriebeeinheit, zum Antrieb oder Antreiben der Zugfahrzeug-Ballenpressen-Kombination umfassen. Ausserdem kann das Zugfahrzeug die Steuereinheit oder eine Zugfahrzeugsteuereinheit umfassen. Das Zugfahrzeug kann ausserdem eines oder mehrere Hilfsaggregate umfassen, beispielsweise eine Pumpe und/oder einen Kühler etc..

Das Zugfahrzeug umfasst die Zapfwelleneinheit, insbesondere ein Zapfwellengetriebe und/oder eine Zapfwelle bzw. Ausgangswelle. Die Zapfwelleneinheit kann ein Zapfwellengetriebe und/oder eine Zapfwelle bzw. Ausgangswelle und eine erste Energiemaschine, bevorzugt einen Elektromotor umfassen. Die erste Energiemaschine kann die Zapfwelleneinheit, insbesondere das Zapfwellengetriebe und/oder die Zapfwelle antreiben. Die erste Energiemaschine, bevorzugt der Elektromotor kann mit dem Zapfwellengetriebe und/oder der Zapfwelle mechanisch verbunden sein. In diesem Fall treibt der Antriebsstrang nur das Zugfahrzeug und nicht die Zapfwelleneinheit an. Die Zapfwelleneinheit kann mit der ersten Energiemaschine also unabhängig vom Antriebsstrang antreibbar sein. Ausserdem kann die Zapfwelleneinheit mit der Ballenpresse zum Antreiben der Presseinheit und der Aufnahmeeinheit, insbesondere der Antriebseinheit, verbunden, bevorzugt mechanisch verbunden sein. Alternativ kann die Zapfwelleneinheit vom Antriebsstrang antreibbar sein.

Die Steuereinheit kann insbesondere als eine integrierte und/oder gemeinsame Steuereinheit ausgebildet sein. Die Steuereinheit kann auf, an oder in der Kombination, insbesondere dem Zugfahrzeug oder der Ballenpresse angeordnet sein. Alternativ oder zusätzlich kann die Steuereinheit als die Zugfahrzeugsteuereinheit und die Ballenpressensteuereinheit ausgebildet sein. Die Zugfahrzeugsteuereinheit kann mit der Ballenpressensteuereinheit verbunden sein, insbesondere signalverbunden und/oder wirkend gekoppelt und/oder signalübertragend und/oder datenleitend verbunden, und/oder ansteuerbar und/oder einstellbar und/oder verstellbar sein. In diesem Fall kann die Ballenpressensteuereinheit auf, an oder in der Ballenpresse und die Zugfahrzeugsteuereinheit auf, an oder in dem Zugfahrzeug angeordnet und/oder diesen zugeordnet sein.

Der Motor kann beispielsweise eine Verbrennungskraftmaschine oder einen Elektromotor sein. Die Getriebeeinheit kann ein Getriebe umfassen. Der Antriebsstrang, insbesondere der Motor und/oder die Getriebeeinheit oder das Getriebe können mit der Zugfahrzeugsteuereinheit oder der Steuereinheit verbunden sein, insbesondere signalverbunden und/oder wirkend gekoppelt und/oder signalübertragend und/oder datenleitend verbunden sein, und/oder ansteuerbar und/oder einstellbar und/oder verstellbar sein. Im Speziellen können eines oder mehrere Bodeneingriffsmittel des Zugfahrzeugs direkt oder mit dem Antriebsstrang, beispielsweise über die Getriebeeinheit bzw. das Getriebe mit dem Motor, mechanisch verbunden sein. Die Bodeneingriffsmittel können vom Motor und/oder der Getriebeeinheit derart antreibbar sein, dass das Zugfahrzeug beispielsweise in einer Vorwärts- und/oder Rückwärtsrichtung bewegbar ist. Die erste Energiemaschine, insbesondere der Elektromotor, kann mit der oder über die Zapfwelleneinheit mit einer Antriebseinheit der Ballenpresse mechanisch verbunden sein, beispielsweise können die Zapfwelle und eine Eingangswelle der Antriebseinheit mechanisch verbunden sein. Dadurch kann die erste Energiemaschine eine Energie und/oder ein Drehmoment und/oder eine Kraft und/oder eine Drehzahl an die Ballenpresse übertragen.

Alternativ oder zusätzlich kann der Antriebsstrang, insbesondere der Motor, mit der oder über die Zapfwelleneinheit mit einer Antriebseinheit der Ballenpresse mechanisch verbunden sein, beispielsweise können die Zapfwelle und eine Eingangswelle der Antriebseinheit mechanisch verbunden sein. Dadurch kann das Zugfahrzeug, bevorzugt der Antriebsstrang oder der Motor, eine Energie und/oder ein Drehmoment und/oder eine Kraft und/oder eine Drehzahl an die Ballenpresse übertragen.

Die Ballenpresse kann über die Eingangswelle und/oder über eine Zugvorrichtung, beispielsweise die Deichsel und/oder eine Kupplung, mit dem Zugfahrzeug mechanisch verbunden sein. Beispielsweise kann ein Zugfahrzeugrahmen des Zugfahrzeugs über die oder mit der Zugvorrichtung mit einem Ballenpressenrahmen der Ballenpresse verbunden sein. Das Zugfahrzeug kann den Zugfahrzeugrahmen umfassen. Das Zugfahrzeug kann das oder die Bodeneingriffsmittel umfassen. Die Bodeneingriffsmittel können das Zugfahrzeug auf dem Boden abstützen und/oder tragen. Der Zugfahrzeugrahmen des Zugfahrzeugs kann sich auf Vorder- und Hinterrädern abstützen. Die Bodeneingriffsmittel können Räder oder Raupen oder Ketten sein. Die Bodeneingriffsmittel, insbesondere die Vorderräder und Hinterräder, können lenkbar und/oder beweglich sein.

Die Kombination, insbesondere das Zugfahrzeug, kann eine Ein- und Ausgabeeinheit umfassen. Die Ballenpressensteuereinheit und/oder die Zugfahrzeugsteuereinheit können oder die Steuereinheit kann mit der Ein- und Ausgabeeinheit verbunden sein, insbesondere signalverbunden und/oder wirkend gekoppelt und/oder signalübertragend und/oder datenleitend verbunden sein, und/oder ansteuerbar und/oder einstellbar und/oder verstellbar sein. Die Ein- und Ausgabeeinheit kann in die Ballenpressensteuereinheit und/oder die Zugfahrzeugsteuereinheit oder die Steuereinheit oder umgekehrt integriert sein. Der Bediener der Kombination bzw. des Zugfahrzeugs oder der Ballenpresse kann dadurch beispielsweise auf Knopfdruck oder mittels eines Sprachbefehls eine Ausgabegrösse oder eine Dichte des Ballens festlegen und/oder angezeigt bekommen und/oder den Gesamtenergiewert sowie den ersten und zweiten Energiewert angezeigt bekommen.

Der Antriebsstrang kann am Zugfahrzeugrahmen angeordnet und/oder befestigt sein, insbesondere auch vom Zugfahrzeugrahmen getragen sein. Die Zugfahrzeugsteuereinheit oder die Steuereinheit kann/können mit dem Antriebsstrang, insbesondere dem Motor und/oder der Getriebeeinheit oder dem Getriebe, und/oder der Zapfwelleneinheit verbunden sein, insbesondere signalverbunden und/oder wirkend gekoppelt und/oder signalübertragend und/oder datenleitend verbunden sein. Die Kombination, insbesondere das Zugfahrzeug, kann einen Geschwindigkeitssensor zur Erfassung einer Geschwindigkeit des Zugfahrzeugs umfassen.

Die Zugfahrzeugsteuereinheit oder die Steuereinheit kann/können konfiguriert sein, den Antriebsstrang, insbesondere den Motor und/oder die Getriebeeinheit oder das Getriebe, und/oder die Zapfwelleneinheit einzustellen und/oder zu verstellen und/oder anzusteuern, beispielsweise indem die Zugfahrzeugsteuereinheit oder die Steuereinheit Ventile und/oder Aktuatoren dieser Komponenten einstellen und/oder verstellen und/oder ansteuern. Im Speziellen kann die Zugfahrzeugsteuereinheit oder die Steuereinheit konfiguriert sein, die erste Energiemaschine, insbesondere den Elektromotor einzustellen und/oder zu verstellen und/oder anzusteuern. Die Zugfahrzeugsteuereinheit oder die Steuereinheit kann konfiguriert sein, eine Energie und/oder eine Kraft und/oder ein Drehmoment und/oder eine Drehzahl der ersten Energiemaschine, insbesondere des Elektromotors einzustellen und/oder zu verstellen und/oder anzusteuern.

Das Zugfahrzeug kann einen oder mehrere Zapfwellensensor(en) zur Erfassung, insbesondere zur direkten oder indirekten Erfassung, des Zapfwellenverbrauchssignals umfassen. Der Zapfwellensensor kann mit der Zugfahrzeugsteuereinheit oder der Steuereinheit verbunden sein, insbesondere signalverbunden und/oder wirkend gekoppelt und/oder signalübertragend und/oder datenleitend verbunden sein. Der Zapfwellensensor kann eine Energie und/oder eine Kraft und/oder ein Drehmoment und/oder eine Drehzahl an oder in der Zapfwelleneinheit, insbesondere am oder im Zapfwellengetriebe und/oder der Zapfwelle, und/oder der ersten Energiemaschine, insbesondere in Form eines Zapfwellenverbrauchssignals, ermitteln, insbesondere erfassen und/oder detektieren. Das Zapfwellenverbrauchssignal kann also eine ausgehende Energie und/oder Kraft und/oder Drehmoment und/oder Drehzahl der Zapfwelleneinheit, insbesondere der Zapfwelle oder des Zapfwellengetriebes, und/oder der ersten Energiemaschine repräsentieren. Der Zapfwellensensor kann ein Drehmomentsensor und/oder ein Drehzahlsensor und/oder ein Kraftsensor und/oder ein Energiesensor sein. Der Zapfwellensensor kann an oder in der Zapfwelleneinheit, insbesondere der Zapfwelle oder des Zapfwellengetriebes, und/oder der ersten Energiemaschine angeordnet sein. Der Zapfwellensensor kann ein Signal, insbesondere das Zapfwellenverbrauchssignal, an die Ballenpressensteuereinheit und/oder eine Zugfahrzeugsteuereinheit oder eine Steuereinheit versenden. Die Ballenpressensteuereinheit und/oder eine Zugfahrzeugsteuereinheit oder eine Steuereinheit können konfiguriert sein, den Gesamtenergiewert anhand des Zapfwellenverbrauchssignals zu ermitteln. Der oder die Zapfwellensensoren (erster und/oder zweiter Zapfwellensensor) können dabei am Zugfahrzeug und/oder der Ballenpresse angeordnet sein. Ebenso kann der Gesamtenergiewert anhand des Energieverbrauchssignals ermittelt werden, indem beispielsweise die maximal verfügbare Energie und/oder Kraft und/oder das Drehmoment und/oder die Drehzahl des Motors eines Zugfahrzeugs abzüglich des peripheren Verbrauchs, z. B. durch Antriebsdrehmoment und/oder Stromerzeugung und/oder HVAC usw., ermittelt wird.

Alternativ kann also die Zugfahrzeugsteuereinheit oder die Steuereinheit konfiguriert sein, die verfügbare Energie und/oder das Drehmoment und/oder die Kraft und/oder die Drehzahl basierend auf einen Verbrauch des Zugfahrzeugs separat zu bestimmen. Die Zugfahrzeugsteuereinheit oder die Steuereinheit kann so konfiguriert sein, dass sie die verfügbare Energie und/oder das Drehmoment und/oder die Kraft und/oder die Drehzahl auf der Grundlage der Eingaben von einem oder mehreren Sensoren des Zugfahrzeugs ermittelt, wie bekannt, und kann dann insbesondere das verfügbare Energieverbrauchssignals an die Ballenpressensteuereinheit ausgeben. Unabhängig davon, welche Methode verwendet wird, kann die Ballenpressensteuereinheit und/oder die Zugfahrzeugsteuereinheit oder die Steuereinheit den Gesamtenergiewert bestimmen, den die Ballenpresse nutzen kann, ohne die verfügbare Energie und/oder das Drehmoment und/oder die Kraft und/oder die Drehzahl des Zugfahrzeugs, insbesondere des Motors zu überschreiten. Optional oder zusätzlich kann die Zugfahrzeugsteuereinheit oder die Steuereinheit ein Energieverbrauchssignal ermitteln, beispielsweise anhand von Parametern des Antriebsstrangs und/oder des bzw. der Hilfsaggregate. Das Energieverbrauchssignal kann also eine Energie und/oder Kraft und/oder Drehmoment und/oder Drehzahl des Zugfahrzeugs sein, die für einen Antrieb der Ballenpresse zur Verfügung stehen.

Die Kombination kann eine oder mehrere GPS-Einrichtung zur Bestimmung der Position der Kombination, insbesondere des Zugfahrzeugs und/oder der Ballenpresse umfassen, insbesondere in Form eines Positionssignals. Die Zugfahrzeugsteuereinheit oder die Steuereinheit können mit der GPS-Einrichtung verbunden, insbesondere signalverbunden und/oder wirkend gekoppelt und/oder signalübertragend und/oder datenleitend verbunden sein. Die Zugfahrzeugsteuereinheit oder die Steuereinheit können konfiguriert sein, das Positionssignal von der GPS-Einrichtung zu empfangen und/oder die GPS-Einrichtung das Positionssignal an die Zugfahrzeugsteuereinheit oder die Steuereinheit senden. Die Zugfahrzeugsteuereinheit oder die Steuereinheit können das Positionssignal mit einem Funkmodul an einen zentralen Server übermittelt und der zentrale Server kann beispielsweise eine Entladeposition bestimmen und/oder ermitteln und der zentrale Server die Entladeposition an die Zugfahrzeugsteuereinheit oder die Steuereinheit übermitteln. Mit der GPS-Einrichtung kann eine Position bzw. das Positionssignal versendbar und/oder empfangbar sein, und/oder insbesondere berechenbar sein. Die GPS-Einrichtung kann beispielsweise eine GPS-Antenne und einen Speicher umfassen. Im Speicher kann die Position der Kombination, insbesondere des Zugfahrzeugs und/oder der Ballenpresse gespeichert sein. Ebenso kann eine Position des Schwads oder der Solllinie des Schwads, die beispielsweise aus vorherigen Bearbeitungsvorgängen des Schwads bekannt sein kann, gespeichert sein.

Im Speziellen kann die Kombination, insbesondere das Zugfahrzeug und/oder die Ballenpresse eine oder mehrere Erfassungseinrichtungen, beispielsweise in Form einer Kamera umfassen, Die Erfassungseinrichtung kann beispielsweise an der Vorder- und/oder Rückseite des Zugfahrzeugs und/oder der Vorder- und/oder Rückseite der Ballenpresse, angeordnet oder angebracht sein. Die Erfassungseinrichtung kann den Schwad in Form eines Erfassungssignal, beispielsweise ein Bild, ein Videosignal oder ein Abstand, erfassen, insbesondere optisch erfassen. Die Erfassungseinrichtung kann mit der Steuereinheit oder der Zugfahrzeugsteuereinheit und/oder der Ballenpressensteuereinheit und/oder einem Bildverarbeitungssystem verbunden sein. Die Erfassungseinrichtung kann das Erfassungssignal an die Steuereinheit oder der Zugfahrzeugsteuereinheit und/oder der Ballenpressensteuereinheit und/oder das Bildverarbeitungssystem senden. Das Bildverarbeitungssystem und/oder die Steuereinheit oder der Zugfahrzeugsteuereinheit und/oder der Ballenpressensteuereinheit können eine Solllinie des Schwads, insbesondere die Längsmittelachse des Schwads bestimmen. Dadurch kann eine optimale Aufnahme und Verarbeitung des Erntegutes ermöglicht werden, sodass der Ballenpressenverbrauchswert, aber insbesondere auch der erste und zweite Energiewert, und/oder die Ausgabegrösse und/oder die Dichte, im Wesentlichen konstant bzw. konstant gehalten werden können.

Die Ballenpresse kann eine Quaderballenpresse zum Bilden von Quaderballen aus Erntegut sein oder eine Rundballenpresse zum Bilden von Rundballen aus Erntegut sein. Die Ballenpresse kann einen Ballenpressenrahmen umfassen. Ebenso kann die Ballenpresse in ein Zugfahrzeug integriert sein, also die Kombination als selbstfahrende Ballenpresse ausgebildet sein. Die Ballenpresse kann durch Räder auf dem Erdboden abgestützt sein. Die Presseinheit der Ballenpresse kann eine größenveränderliche Presskammer oder eine variable Presskammer umfassen. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Das oder die Pressmittel kann in der grössenveränderlichen Ballenpresse beispielsweise indirekt über Rollen und/oder Ketten und/oder Wellen und/oder Zahnrädern, insbesondere mit der Antriebseinheit, antreibbar sein.

Ebenso kann die Ballenpresse auch eine größenunveränderliche Presskammer umfassen. Hierbei kann ein Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Das Pressmittel kann in der grössenunveränderlichen Ballenpresse beispielsweise über Ketten und/oder Wellen und/oder Zahnrädern, insbesondere mit der Antriebseinheit, antreibbar sein.

Die Ballenpresse, insbesondere die Presseinheit, kann einen ersten Aktuator zum Einstellen und/oder Verstellen der Presseinheit umfassen. Der erste Aktuator kann zum Einstellen und/oder Verstellen der Presseinheit, bevorzugt der Pressmittel, besonders bevorzugt des Drucks bzw. des Ballenformungsdrucks der Pressmittel, ausgebildet sein. Mit dem ersten Aktuator kann also die Dichte des Ballens eingestellt und/oder verstellt werden, insbesondere indem der Druck oder Ballenformungsdruck der Pressmitteln eingestellt und/oder verstellt wird. Ausserdem kann durch eine oder mit einer Verringerung der Dichte des Ballens der erste Energiewert der Presseinheit verringert. Ebenso kann durch eine oder mit einer Erhöhung der Dichte des Ballens der erste Energiewert der Presseinheit erhöht werden.

Der erste Aktuator kann mit der Steuereinheit oder der Ballenpressensteuereinheit verbunden sein, insbesondere signalverbunden und/oder wirkend gekoppelt und/oder signalübertragend und/oder datenleitend verbunden sein. Im Speziellen kann die Ballenpresse, insbesondere die Presseinheit, ein erstes Ventil oder eine erste Ventilanordnung, insbesondere ein erstes Steuerventil, zum Ansteuern und/oder Einstellen und/oder Verstellen des ersten Aktuators umfassen. Die Steuereinheit oder die Ballenpressensteuereinheit kann mit dem Ventil oder der Ventilanordnung verbunden sein, insbesondere signalverbunden und/oder wirkend gekoppelt und/oder signalübertragend und/oder datenleitend verbunden sein. Die Steuereinheit oder die Ballenpressensteuereinheit kann konfiguriert sein, den ersten Aktuator, insbesondere über das oder mit dem Ventil oder die Ventilanordnung, anzusteuern und/oder einzustellen und/oder zu verstellen. Der erste Aktuator kann beispielsweise in Form eines Hydraulikzylinders oder Pneumatikzylinder oder Hebekissen oder Gewindetrieb oder Zahnstangentrieb oder Elektrozylinder ausgebildet sein. Die Ballenpresse, insbesondere die Antriebseinheit der Ballenpresse, kann beispielsweise mit der Zapfwelleneinheit des Zugfahrzeugs, mit welcher die Ballenpresse bzw. die Antriebseinheit mechanisch verbunden sein kann, antreibbar sein.

Die Ballenpresse umfasst die Aufnahmeeinheit, insbesondere eine Pick-up, zum Aufnehmen von Erntegut. Das Erntegut kann als ein Schwad angeordnet sein. Die Aufnahmeeinheit kann das Erntegut, insbesondere in Form des Schwads aufnehmen.

Die Ballenpresse, insbesondere die Aufnahmeeinheit, kann einen zweiten Aktuator zum Einstellen und/oder Verstellen der Aufnahmeeinheit umfassen. Der zweite Aktuator kann zum Einstellen und/oder Verstellen der Aufnahmeeinheit ausgebildet sein. Der zweite Aktuator kann mit der Steuereinheit oder der Ballenpressensteuereinheit verbunden sein, insbesondere bevorzugt signalverbunden und/oder wirkend gekoppelt und/oder signalübertragend und/oder datenleitend verbunden sein. Im Speziellen kann die Ballenpresse, insbesondere die Aufnahmeeinheit, ein zweites Ventil oder eine zweite Ventilanordnung, insbesondere ein zweites Steuerventil, zum Ansteuern und/oder Einstellen und/oder Verstellen des zweiten Aktuators umfassen. Die Steuereinheit oder die Ballenpressensteuereinheit kann über das zweite Ventil oder die zweite Ventilanordnung mit dem zweiten Aktuator verbunden, insbesondere bevorzugt signalverbunden und/oder wirkend gekoppelt und/oder signalübertragend und/oder datenleitend verbunden sein. Die Ballenpressensteuereinheit kann konfiguriert sein, den zweiten Aktuator, insbesondere über das zweite Ventil oder die zweite Ventilanordnung, anzusteuern und/oder einzustellen und/oder zu verstellen. Die Steuereinheit oder die Ballenpressensteuereinheit kann konfiguriert sein in Abhängigkeit von einem ersten Steuersignal die Aufnahmeeinheit, bevorzugt eine Höhe der Aufnahmeeinheit einzustellen und/oder zu verstellen. Der zweite Aktuator kann beispielsweise in Form eines Hydraulikzylinders oder Pneumatikzylinder oder Hebekissen oder Gewindetrieb oder Zahnstangentrieb oder Elektrozylinder ausgebildet sein.

Die Ballenpresse kann ausserdem eine Fördereinheit, beispielsweise einen Rotor und/oder ein Förderband, umfassen. Die Ballenpresse, insbesondere die Fördereinheit, kann einen dritten Aktuator zum Einstellen und/oder Verstellen der Fördereinheit umfassen. Der dritte Aktuator kann zum Einstellen und/oder Verstellen der Fördereinheit ausgebildet sein. Der dritte Aktuator kann mit der Steuereinheit oder der Ballenpressensteuereinheit verbunden sein, insbesondere bevorzugt signalverbunden und/oder wirkend gekoppelt und/oder signalübertragend und/oder datenleitend verbunden sein. Im Speziellen kann die Ballenpresse, insbesondere die Fördereinheit, ein drittes Ventil oder eine dritte Ventilanordnung, insbesondere ein drittes Steuerventil, zum Ansteuern und/oder Einstellen und/oder Verstellen des dritten Aktuators umfassen. Die Steuereinheit oder die Ballenpressensteuereinheit kann über das dritte Ventil oder die dritte Ventilanordnung mit dem dritten Aktuator verbunden, bevorzugt signalverbunden und/oder wirkend gekoppelt und/oder signalübertragend und/oder datenleitend verbunden sein. Die Steuereinheit oder die Ballenpressensteuereinheit kann konfiguriert sein, den dritten Aktuator, insbesondere über das dritte Ventil oder die dritte Ventilanordnung, anzusteuern und/oder einzustellen und/oder zu verstellen. Die Ballenpressensteuereinheit kann konfiguriert sein in Abhängigkeit von einem zweiten Steuersignal die Fördereinheit, bevorzugt eine Fördermenge der Fördereinheit einzustellen und/oder zu verstellen. Der dritte Aktuator kann beispielsweise in Form eines Hydraulikzylinders oder Pneumatikzylinder oder Hebekissen oder Gewindetrieb oder Zahnstangentrieb oder Elektrozylinder ausgebildet sein.

Mit der Presseinheit kann der Ballen, insbesondere in einer Pressphase, geformt werden. Die Ballenpresse kann eine Wickeleinheit zum Umwickeln des fertig geformten Ballens mit einem Wickelmaterial, beispielsweise Netz, Folie oder Bindegarn, umfassen. Der fertig geformte Ballen kann, insbesondere in der Presseinheit oder Presskammer, mit dem Wickelmaterial umwickelt werden. Die Ballenpresse kann eine Auswurfeinheit, beispielsweise eine Auswurfklappe oder ein Heckteil oder eine Heckklappe der Ballenpresse, umfassen. Der Ballen, bevorzugt der fertig geformte Ballen oder der fertig umwickelte Ballen, kann über die Auswurfeinheit, insbesondere über die mit der Auswurfeinheit versehene Presseinheit oder Presskammer, entladen oder ausgeworfen werden. Die Auswurfeinheit kann einen Teil der Presskammer, insbesondere einen Teil der Pressmittel, umfassen und/oder als ein Teil der Presskammer ausgebildet sein. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld liegt oder steht, und/oder zum Befördern des Ernteguts in die Presskammer kann ebenfalls am Ballenpressenrahmen angeordnet, bevorzugt mit diesem mechanisch verbunden und/oder an diesem befestigt sein. Die Ballenpresse, insbesondere die Antriebseinheit und/oder die Presskammer und/oder die Aufnahmeeinheit, kann, um die maximal verarbeitbare Energie bzw. Drehmoment oder Kraft oder Drehzahl der jeweiligen Einheit zu begrenzen, eine oder mehrere Überlasteinheiten umfassen.

Wesentlich für die Erfindung ist, dass, insbesondere während eines Betriebes der Kombination, die Steuereinheit oder die Ballenpressensteuereinheit konfiguriert ist, anhand des Energieverbrauchssignals oder des Zapfwellenverbrauchssignals bzw. dem ermittelten Gesamtenergiewert und eines Vergleichs des Gesamtenergiewert mit dem Ballenpressenverbrauchswert eine mögliche Überlastung oder Unterlastung der Ballenpresse zu erkennen und mit oder basierend auf dem ersten Stellsignal die Zapfwelleneinheit einzustellen und/oder zu verstellen, wenn der Gesamtenergiewert vom Ballenpressenverbrauchswert verschieden ist. Alternativ kann die Ballenpressensteuereinheit konfiguriert sein, anhand des Energieverbrauchssignals oder des Zapfwellenverbrauchssignals bzw. dem ermittelten Gesamtenergiewert und eines Vergleichs des Gesamtenergiewerts mit dem Ballenpressenverbrauchswert eine mögliche Überlastung oder Unterlastung der Ballenpresse zu erkennen, und das ersten Stellsignal an die Zugfahrzeugsteuereinheit zu versenden, wenn der Gesamtenergiewert vom Ballenpressenverbrauchswert verschieden ist. Die Zugfahrzeugsteuereinheit kann konfiguriert sein, mit oder basierend auf dem ersten Stellsignal die Zapfwelleneinheit einzustellen und/oder zu verstellen.

Die Steuereinheit oder alternativ die Ballenpressensteuereinheit und die Zugfahrzeugsteuereinheit können konfiguriert sein, die Gesamtenergie in Abhängigkeit vom ersten Stellsignal anzupassen, wenn der Gesamtenergiewert vom Ballenpressenverbrauchswert verschieden ist. Wenn der Gesamtenergiewert kleiner oder gleich dem Ballenpressenverbrauchswert ist, was anzeigt, dass nicht genügend Energie, Kraft, Drehmoment oder Drehzahl zur Verfügung steht, um den Betrieb der Ballenpresse mit den aktuellen Einstellungen aufrechtzuerhalten, kann die Steuereinheit oder alternativ die Ballenpressensteuereinheit und Zugfahrzeugsteuereinheit das erste Stellsignal ausgeben, um den Gesamtenergiewert mittels der Zapfwelleneinheit zu erhöhen. Zusätzlich oder alternativ kann, wenn der Gesamtenergiewert grösser als der Ballenpressenverbrauchswert ist, was anzeigt, dass mehr Energie, Kraft, Drehmoment oder Drehzahl zur Verfügung steht als benötigt wird, um den Betrieb der Ballenpresse mit den aktuellen Einstellungen aufrechtzuerhalten, die Steuereinheit oder alternativ die Ballenpressensteuereinheit und die Zugfahrzeugsteuereinheit das erste Stellsignal ausgeben, um den Gesamtenergiewert mittels der Zapfwelleneinheit zu verringern.

Dadurch kann eine Überlastung oder Unterlastung der Ballenpresse vermieden werden. Mit anderen Worten der Energieverbrauch der Ballenpresse kann an die maximal zur Verfügung stehende Gesamtenergie (Gesamtenergiewert) angepasst werden. Ein weiterer Vorteil der vorliegenden Erfindung besteht darin, dass es einem Bediener oder aber der Ballenpressensteuereinheit und/oder der Zugfahrzeugsteuereinheit oder der Steuereinheit ermöglicht wird, bessere Entscheidungen hinsichtlich einer möglicherweise drohenden Überlast- oder Unterlastsituation zu treffen.

In Ausgestaltung der Erfindung ist die Steuereinheit konfiguriert, mit einem oder basierend auf einem Fahrsignal eine Geschwindigkeit der Kombination einzustellen und/oder zu verstellen, wenn der Gesamtenergiewert vom Ballenpressenverbrauchswert verschieden ist. Die Steuereinheit kann mit dem Antriebsstrang, insbesondere dem Motor und/oder der Getriebeeinheit oder dem Getriebe, verbunden, bevorzugt signalverbunden und/oder wirkend gekoppelt und/oder signalübertragend und/oder datenleitend verbunden sein. Dazu kann die Steuereinheit beispielsweise mit Ventilen oder Aktuatoren des Motors oder des Getriebes verbunden, bevorzugt signalverbunden und/oder wirkend gekoppelt und/oder signalübertragend und/oder datenleitend verbunden sein. Die Steuereinheit kann konfiguriert sein, das Fahrsignal zum Einstellen und/oder Verstellen der Geschwindigkeit zu versenden, insbesondere an den Antriebsstrang. Die Ballenpressensteuereinheit kann konfiguriert sein, das Energieverbrauchssignal oder ein Zapfwellenverbrauchssignal zu empfangen, und mit dem empfangenen Signal einen Gesamtenergiewert zu ermitteln. Die Ballenpressensteuereinheit kann weiter konfiguriert sein, den Gesamtenergiewert mit einem Ballenpressenverbrauchswert zu vergleichen, und das Fahrsignal zum Einstellen und/oder Verstellen der Geschwindigkeit der Kombination, insbesondere an die Zugfahrzeugsteuereinheit zu versenden, wenn der Gesamtenergiewert vom Ballenpressenverbrauchswert verschieden ist. Die Zugfahrzeugsteuereinheit kann konfiguriert sein, das Fahrsignal zu empfangen. Die Zugfahrzeugsteuereinheit kann konfiguriert sein, mit oder basierend auf dem Fahrsignal den Antriebsstrang einzustellen und/oder zu verstellen. Die Zugfahrzeugsteuereinheit kann konfiguriert sein, das Fahrsignal zum Einstellen und/oder Verstellen des Antriebsstrangs zu versenden, insbesondere an den Antriebsstrang. Die Zugfahrzeugsteuereinheit oder die Steuereinheit kann konfiguriert sein, den Antriebsstrang, insbesondere den Motor und/oder die Getriebeeinheit oder das Getriebe, des Zugfahrzeugs mit dem Fahrsignal einzustellen und/oder zu verstellen und/oder anzusteuern und mit dem oder basierend auf dem Fahrsignal eine Geschwindigkeit des Zugfahrzeugs einzustellen und/oder zu verstellen, insbesondere zu erhöhen oder zu verringern. Alternativ oder zusätzlich kann die Zugfahrzeugsteuereinheit oder die Steuereinheit aber auch konfiguriert sein, basierend auf dem Fahrsignal den Antriebsstrang, insbesondere den Motor und/oder die Getriebeeinheit oder das Getriebe, des Zugfahrzeugs mit einem weiteren Steuersignal einzustellen und/oder zu verstellen. Dadurch kann die Geschwindigkeit des Zugfahrzeugs geändert, insbesondere erhöht oder gesenkt werden, wodurch der Ballenpressenverbrauchswert, insbesondere an den Gesamtenergiewert, angepasst oder verändert werden kann.

Die Geschwindigkeit der Kombination bzw. des Zugfahrzeugs kann mit dem Fahrsignal oder dem weiteren Steuersignal geändert werden, indem eine Energie und/oder eine Kraft und/oder ein Drehmoment und/oder eine Drehzahl des Antriebsstrangs, insbesondere des Motors erhöht oder gesenkt werden. Zusätzlich oder alternativ kann ein Gang der Getriebeeinheit oder des Getriebes, insbesondere eine Übersetzung, eingestellt und/oder verstellt werden. Bei einem stufenlosen Getriebe kann eine Energie und/oder eine Kraft und/oder ein Drehmoment und/oder eine Drehzahl des Getriebes erhöht oder gesenkt werden. Mit anderen Worten, die Zugfahrzeugsteuereinheit oder die Steuereinheit können anhand oder mit oder basierend auf dem Fahrsignal oder dem weiteren Steuersignal den Motor und/oder die Getriebeeinheit derart einstellen und/oder verstellen, dass das Zugfahrzeug seine Geschwindigkeit und somit den Ballenpressenverbrauchswerts, insbesondere den ersten Energiewert der Presseinheit und/oder den zweiten Energiewert der Aufnahmeeinheit ändert. Der Ballenpressenverbrauchwerts kann dadurch an den Gesamtenergiewert angenähert werden, insbesondere kann der Ballenpressenverbrauchwerts derart eingestellt und/oder verstellt werden, dass dieser gleich dem Gesamtenergiewert wird. Die Anpassung der Geschwindigkeit kann automatisch oder durch einen Bediener der Kombination erfolgen.

Durch Erhöhen der Geschwindigkeit des Zugfahrzeugs können der erste und/oder zweite Energiewert und/oder der Ballenpressenverbrauchwerts erhöht und durch Verringern der Geschwindigkeit des Zugfahrzeugs verringert werden. Insbesondere der zweite Energiewert wird durch die Dichte des geernteten Ernteguts, insbesondere des Schwads beeinflusst. Somit kann die Geschwindigkeit des Zugfahrzeugs erhöht werden, wenn sich ein Schwad mit geringer Dichte nähert, um einen gleichmäßigen Erntegutdurchsatz aufrechtzuerhalten. Umgekehrt kann die Geschwindigkeit des Zugfahrzeugs verringert werden, wenn sich ein Schwad mit hoher Dichte nähert, um einen gleichmäßigen Erntegutdurchsatz aufrechtzuerhalten. Insgesamt kann dadurch eine Überlastung oder Unterlastung der Ballenpresse bzw. der Kombination vermieden werden.

Vorteilhafterweise kann dadurch, insbesondere während eines Betriebes der Kombination, anhand des Energieverbrauchssignals oder des Zapfwellenverbrauchssignal bzw. dem ermittelten Gesamtenergiewert und eines Vergleichs des Gesamtenergiewert mit dem Ballenpressenverbrauchswert eine mögliche Überlastung oder Unterlastung der Ballenpresse erkannt und mit dem oder basierend auf dem Fahrsignal die Geschwindigkeit der Kombination eingestellt und/oder verstellt werden, um den Ballenpressenverbrauchswert zu erhöhen oder zu verringern. Dadurch kann eine Überlastung oder Unterlastung der Kombination vermieden werden. Mit anderen Worten der Energieverbrauch der Ballenpresse kann an die maximal zur Verfügung stehende Gesamtenergie (Gesamtenergiewert) angepasst werden. Ein weiterer Vorteil der vorliegenden Erfindung besteht darin, dass es einem Bediener oder aber der Ballenpressensteuereinheit und/oder der Zugfahrzeugsteuereinheit oder der Steuereinheit ermöglicht wird, bessere Entscheidungen hinsichtlich einer möglicherweise drohenden Überlastsituation zu treffen.

In Ausgestaltung der Erfindung, ist Steuereinheit konfiguriert, den Gesamtenergiewert mit einem Ballenpressenverbrauchswert zu vergleichen, und mit einem oder basierend auf einem zweiten Stellsignal eine Dichte des Ballens, insbesondere den Druck oder den Ballenformungsdruck, einzustellen und/oder zu verstellen, wenn der Gesamtenergiewert vom Ballenpressenverbrauchswert verschieden ist. Die Steuereinheit kann mit der Presseinheit, insbesondere dem ersten Aktuator oder dem ersten Ventil oder der ersten Ventilanordnung, insbesondere dem ersten Steuerventil, verbunden sein, insbesondere signalverbunden und/oder wirkend gekoppelt und/oder signalübertragend und/oder datenleitend verbunden sein.

Steuereinheit kann konfiguriert sein, das zweite Stellsignal zum Einstellen und/oder Verstellen der Dichte des Ballens zu versenden, insbesondere an den ersten Aktuator oder das erste Ventil oder die erste Ventilanordnung, und/oder mit dem zweiten Stellsignal den ersten Aktuator oder das erste Ventil oder die erste Ventilanordnung einzustellen und/oder zu verstellen, wenn der Gesamtenergiewert vom Ballenpressenverbrauchswert verschieden ist. Ebenso kann die Ballenpressensteuereinheit konfiguriert sein, den Gesamtenergiewert mit einem Ballenpressenverbrauchswert zu vergleichen, und das zweite Stellsignal zum Einstellen und/oder Verstellen der Dichte des Ballens, insbesondere an den ersten Aktuator oder das erste Ventil oder die erste Ventilanordnung zu versenden, und/oder mit dem zweiten Stellsignal den ersten Aktuator oder das erste Ventil oder die erste Ventilanordnung einzustellen und/oder zu verstellen, wenn der Gesamtenergiewert vom Ballenpressenverbrauchswert verschieden ist. Die Steuereinheit oder die Ballenpressensteuereinheit kann konfiguriert sein, mit dem oder basierend auf dem oder in Abhängigkeit vom zweiten Stellsignal die Presseinheit, bevorzugt die Dichte des Ballens, besonders bevorzugt den Druck oder Ballenformungsdruck der Pressmittel einzustellen und/oder zu verstellen, insbesondere wenn der Gesamtenergiewert vom Ballenpressenverbrauchswert verschieden ist. Die Steuereinheit oder die Ballenpressensteuereinheit kann mit dem oder basierend auf dem zweiten Stellsignal also den Ballenformungsdruck anpassen, insbesondere den Druck oder Ballenformungsdruck erhöhen, wobei der erste Energiewert erhöht wird, oder den Druck oder Ballenformungsdruck verringern, wobei der erste Energiewert verringert wird.

In Ausgestaltung der Erfindung ist der Ballenpressenverbrauchswert gleich der Summe des ersten und zweiten Energiewertes. Mit anderen Worten, der Ballenpressenverbrauchswert entspricht der Summe aus erstem und zweitem Energiewert. Somit gilt

$$E_{Ballenpresse} = E_1 + E_2$$

Mit

$E_{Ballenpresse}$ = Ballenpressenverbrauchswert

$E_1$ = Erster Energiewert

$E_2$ = Zweiter Energiewert

Der Ballenpressenverbrauchswert kann aber auch, falls die Ballenpresse weitere Einheiten umfasst, wie folgt definiert sein:

$$E_{Ballenpresse} = E_1 + E_2 + \cdots + E_n$$

Mit

$E_{Ballenpresse}$ = Ballenpressenverbrauchswert

$E_1$ = Erster Energiewert, $E_2$ = Zweiter Energiewert, $E_n$ = n-ter Energiewertder n-ten Einheit, bspw. Fördereinheit und/oder Rotor etc.

Die Ballenpressensteuereinheit und/oder Zugfahrzeugsteuereinheit oder die Steuereinheit kann also konfiguriert sein, den Gesamtenergiewert mit der der Summe aus erstem und zweitem Energiewertes zu vergleichen. Ausserdem kann die Ballenpressensteuereinheit und/oder Zugfahrzeugsteuereinheit oder die Steuereinheit konfiguriert sein die Summe aus erstem und zweiten Energiewert zu ermitteln, insbesondere zu berechnen und/oder zu bestimmen. Vorteilshafterweise können so die oben genannte Vorteile erreicht werden, also eine Überlastung oder Unterlastung der Ballenpresse vermieden werden.

In Ausgestaltung der Erfindung umfasst die Kombination, insbesondere die Ballenpresse, einen ersten Sensor zur Erfassung, insbesondere zur direkten oder indirekten Erfassung, des ersten Energiewertes der Presseinheit und des zweiten Energiewertes der Aufnahmeeinheit, insbesondere in Form eines ersten Energiesignals. Der erste Sensor kann im Speziellen die Summe des ersten und zweiten Energiewerts erfassen oder ermitteln. Die Kombination, insbesondere die Ballenpresse, kann einen oder mehrere erste Sensoren umfassen. Der erste Sensor kann ein Drehmomentsensor und/oder ein Drehzahlsensor und/oder ein Kraftsensor und/oder ein Energiesensor sein. Der erste Sensor kann eine Energie und/oder eine Kraft und/oder ein Drehmoment und/oder eine Drehzahl der Aufnahmeeinheit und/oder der Presseinheit oder alternativ der Antriebseinheit erfassen. Der erste Sensor kann an oder in der Antriebseinheit, insbesondere an der Eingangswelle und/oder an oder in einer Überlastkupplung der Antriebseinheit und/oder an einer Ausgangswelle oder einer ersten Antriebswelle und/oder an oder in einer Getriebeeinrichtung angeordnet sein. Der erste Sensor sendet Signale an die Steuereinheit oder Ballenpressensteuereinheit. Die Steuereinheit oder Ballenpressensteuereinheit kann mit dem ersten Sensor verbunden, insbesondere signalverbunden und/oder wirkend gekoppelt und/oder signalübertragend und/oder datenleitend verbunden sein. Ausserdem kann die Steuereinheit Ballenpressensteuereinheit konfiguriert sein, anhand des Signals oder der Signale bzw. mit dem oder den Signalen des ersten Sensors, insbesondere mit dem oder anhand des ersten Energiesignals, die Summe des ersten und zweiten Energiewertes zu ermitteln, insbesondere die Summe des ersten und zweiten Energiewertes berechnen. Die Steuereinheit oder die Ballenpressensteuereinheit kann konfiguriert sein, das erste Energiesignal vom ersten Sensor zu empfangen.

In Ausgestaltung der Erfindung umfasst die Kombination, insbesondere die Ballenpresse, einen ersten Sensor zur Erfassung, insbesondere zur direkten oder indirekten Erfassung, des ersten Energiewertes der Presseinheit, insbesondere in Form eines ersten Energiesignals, und einen zweiten Sensor zur Erfassung, insbesondere zur direkten oder indirekten Erfassung, des zweiten Energiewertes der Aufnahmeeinheit, insbesondere in Form eines zweiten Energiesignals. Die Kombination, insbesondere die Ballenpresse, kann einen oder mehrere erste Sensoren umfassen. Die Kombination, insbesondere die Ballenpresse, kann einen oder mehrere zweite Sensoren umfassen. Der erste Sensor kann ein Drehmomentsensor und/oder ein Drehzahlsensor und/oder ein Kraftsensor und/oder ein Energiesensor sein. Der erste Sensor kann eine Energie und/oder eine Kraft und/oder ein Drehmoment und/oder eine Drehzahl der Presseinheit und/oder der Antriebseinheit, insbesondere von Komponenten der Antriebseinheit, erfassen. Der zweite Sensor kann ein Drehmomentsensor und/oder ein Drehzahlsensor und/oder ein Kraftsensor und/oder ein Energiesensor und/oder ein Durchflusssensor sein. Der zweite Sensor kann eine Energie und/oder eine Kraft und/oder ein Drehmoment und/oder eine Drehzahl der Aufnahmeeinheit und/oder der Antriebseinheit erfassen. Der erste Sensor kann an oder in der Presseinheit und/oder der Antriebseinheit, insbesondere der ersten Antriebswelle und/oder an oder in der Getriebeeinrichtung angeordnet sein. Der erste Sensor sendet Signale an die Steuereinheit oder die Ballenpressensteuereinheit. Der zweite Sensor kann an oder in der Aufnahmeeinheit und/oder der Antriebseinheit, insbesondere an einer zweiten Antriebswelle und/oder an oder in der Getriebeeinrichtung angeordnet sein. Alternativ oder zusätzlich kann der zweite Sensor, der insbesondere als ein Durchflusssensor oder Drehmomentsensor ausgebildet sein kann, an oder in der Aufnahmeeinheit angeordnet sein. Der zweite Sensor liefert Signale an die Steuereinheit oder die Ballenpressensteuereinheit. Die Steuereinheit oder die Ballenpressensteuereinheit ist mit dem ersten und zweiten Sensor verbunden ist, insbesondere signalverbunden und/oder wirkend gekoppelt und/oder signalübertragend und/oder datenleitend verbunden ist. Ausserdem ist die Steuereinheit oder die Ballenpressensteuereinheit konfiguriert, anhand oder mit den Signalen des ersten und zweiten Sensors, insbesondere mit dem oder anhand des ersten und zweiten Energiesignals, den ersten und zweiten Energiewert und/oder die Summe des ersten und zweiten Energiewertes zu ermitteln, insbesondere zu berechnen. Ebenso kann die Steuereinheit oder die Ballenpressensteuereinheit konfiguriert sein, das erste Energiesignal vom ersten Sensor und das zweite Energiesignal vom zweiten Sensor zu empfangen. Dadurch kann vorteilhafterweise eine genaue Erfassung des ersten und zweiten Energiewertes erfolgen.

In Ausgestaltung der Erfindung umfasst die Kombination, insbesondere die Ballenpresse, eine Antriebseinheit, die mit der Presseinheit und der Aufnahmeeinheit mechanisch verbunden ist. Die Presseinheit und die Aufnahmeeinheit sind mit der oder über die Antriebseinheit antreibbar. Die Antriebseinheit kann eine Eingangswelle und/oder eine Überlastkupplung und/oder eine erste und zweite Antriebswelle umfassen. Dabei kann die Presseinheit von oder mit der Antriebseinheit mit der ersten Antriebswelle, insbesondere mit einem ersten Energiewert, antreibbar sein. Die Aufnahmeeinheit kann von oder mit der Antriebseinheit mit der zweiten Antriebswelle, insbesondere mit dem zweiten Energiewert, antreibbar sein. Die Antriebseinheit kann aber auch nur die Eingangswelle und/oder eine Überlastkupplung und eine Ausgangswelle umfassen, wobei die Presseinheit und die Aufnahmeeinheit von oder mit der Antriebseinheit mit der Ausgangswelle antreibbar sein können. Die Antriebseinheit kann von oder mit der Zapfwelleneinheit des Zugfahrzeugs, welches mit der Ballenpresse verbunden und/oder gekoppelt sein kann, antreibbar sein. Im Speziellen kann die Eingangswelle mit der Zapfwelle des Zugfahrzeugs mechanisch verbunden sein und von oder mit der Zapfwelle antreibbar sein. An oder in der Eingangswelle kann die Überlastkupplung angeordnet sein oder die Eingangswelle die Überlastkupplung umfassen. Im Falle einer Überlastsituation kann die Überlastkupplung die Eingangswelle vom Zugfahrzeug, insbesondere der Zapfwelleneinheit, trennen. Dadurch können die angetrieben Teile der Ballenpresse vom Zugfahrzeug getrennt werden. Ein Vorteil der vorliegenden Erfindung besteht darin, dass eine Betätigung der Überlastkupplung vermieden werden kann. Die Antriebseinheit kann eine Getriebeeinrichtung umfassen. Die Getriebeeinrichtung kann mit der Eingangswelle mechanisch verbunden sein und/oder über die oder mit der Eingangswelle antreibbar sein. Getriebeeinrichtung kann mit der ersten und/oder zweiten Antriebswelle mechanisch verbunden sein. Ebenso kann die Getriebeeinrichtung aber auch mit der Ausgangswelle mechanisch verbunden sein. Die erste und/oder zweite Antriebswelle oder die Ausgangswelle können über die oder mit der Getriebeeinrichtung antreibbar sein. Ebenso kann die Getriebeeinrichtung aber auch die Presseinheit und/oder die Aufnahmeeinheit direkt antreiben. Die Getriebeeinrichtung kann ein Kegelrad oder Kegelradgetriebe umfassen. Die erste und/oder zweite Antriebswelle oder die Ausgangswelle können an oder in der Getriebeeinrichtung beginnen. Das Übersetzungsverhältnis zwischen der Eingangswelle und der ersten Antriebswelle kann durch Anpassung des Kegelrades oder Kegelradgetriebes vom Übersetzungsverhältnis der Eingangswelle und der zweiten Antriebswelle abweichen. Von der Antriebseinheit kann eine Gesamtenergie, beispielsweise eine Leistung und/oder Energie und/oder ein Drehmoment und/oder eine Drehzahl, an die Presseinheit und/oder Aufnahmeeinheit verteilbar und/oder übertragbar sein. Die Antriebseinheit kann mittels eines oder mehrerer Zahnräder und/oder Wellen mit der Presseinheit, insbesondere den Pressmitteln, und der Aufnahmeeinheit mechanisch verbunden sein.

In Ausgestaltung der Erfindung ist der erste Energiewert mit dem ersten Sensor an der ersten Antriebswelle der Antriebseinheit ermittelbar und der zweite Energiewert mit dem zweiten Sensor an einer zweiten Antriebswelle ermittelbar. Ebenso kann aber auch die Summe des ersten und zweiten Energiewerts mit dem ersten Sensor an einer Ausgangswelle oder Getriebeeinheit der Antriebseinheit ermittelbar sein. Dadurch können vorteilhafterweise der erste und zweite Energiewert oder deren Summe auf einfach Art und Weise erfasst werden.

In Ausgestaltung der Erfindung ist die Steuereinheit, oder insbesondere die Ballenpressensteuereinheit und/oder Zugfahrzeugsteuereinheit, konfiguriert, eine Ausgabegrösse des vollständig ausgebildeten Ballens einzustellen, wobei die Ausgabegrösse definiert oder festlegt, wann der vollständig ausgebildete Ballen ausgegeben wird, und mit dem oder basierend auf dem ersten Stellsignal die Zapfwelleneinheit einzustellen und/oder zu verstellen und/oder mit dem oder basierend auf dem Fahrsignal eine Geschwindigkeit der Kombination einzustellen und/oder zu verstellen und /oder mit dem oder basierend auf dem zweiten Stellsignal eine Dichte des Ballens einzustellen und/oder zu verstellen, und die Ausgabegrösse nicht zu verändern oder ohne die Ausgabegrösse zu verändern, wenn der Gesamtenergiewert vom Ballenpressenverbrauchswert verschieden ist.

Die Steuereinheit, oder insbesondere die Ballenpressensteuereinheit und/oder Zugfahrzeugsteuereinheit, kann also konfiguriert sein, den Ballenpressenverbrauchswert an den Gesamtenergiewert anzupassen, besonders bevorzugt den Ballenpressenverbrauchswert derart einzustellen und/oder zu verstellen, dass der Ballenpressenverbrauchswert kleiner oder gleich dem Gesamtenergiewert ist, und/oder den Gesamtenergiewert an den Ballenpressenverbrauchswert anzupassen, besonders bevorzugt den Gesamtenergiewert derart einzustellen und/oder zu verstellen, dass der Gesamtenergiewert grösser oder gleich dem Ballenpressenverbrauchswert ist, ohne die Ausgabegrösse des vollständig ausgebildeten Ballens zu verändern. Die Steuereinheit, oder insbesondere die Zugfahrzeugsteuereinheit, kann im Speziellen konfiguriert sein, mit dem ersten Stellsignal die Zapfwelleneinheit derart einzustellen und/oder zu verstellen, dass der Gesamtenergiewert grösser als der Ballenpressenverbrauchswert ist, ohne die Ausgabegrösse zu verändern, wenn der Gesamtenergiewert kleiner als der Ballenpressenverbrauchswert ist. Zusätzlich kann die Steuereinheit, oder insbesondere die Ballenpressensteuereinheit, konfiguriert sein, die Dichte des Ballens mit dem zweiten Stellsignal zu verringern, um den Ballenpressenverbrauchswert, insbesondere den ersten Energiewert, ohne die Ausgabegrösse zu verändern, wenn der Gesamtenergiewert kleiner als der Ballenpressenverbrauchswert ist. Zusätzlich kann die Steuereinheit, oder insbesondere die Zugfahrzeugsteuereinheit, konfiguriert sein, die Geschwindigkeit der Kombination mit dem Fahrsignal zu verringern, wenn der Gesamtenergiewert kleiner als der Ballenpressenverbrauchswert ist, um den Ballenpressenverbrauchswert zu verändern, ohne die Ausgabegrösse zu verändern, wenn der Gesamtenergiewert kleiner als der Ballenpressenverbrauchswert ist. Die Ausgabegrösse kann ein Volumen und/oder Durchmesser und/oder ein Radius und/oder eine Masse des Ballens und/oder eine Spannung der Pressmittel und/oder eine Verteilung des Ernteguts, insbesondere eine seitliche Verteilung des Ernteguts im Schwad sein. Der erste und zweite Energiewert, insbesondere auch deren Summe, können also von der Ausgabegrösse abhängen. Die Ballenpresse kann einen oder mehrere Ballensensoren zur Erfassung der Ausgabegrösse umfassen. Der oder die Ballensensoren können die Ausgabegrösse erfassen, insbesondere in Form eines Ballensignals erfassen. Der oder die Ballensensoren können an oder in der Ballenpresse, insbesondere an oder in der Presseinheit und/oder der Aufnahmeeinheit, angeordnet sein. Das Ballensignal kann von dem oder den Ballensensoren an die Ballenpressensteuereinheit gesendet bzw. von der Ballenpressensteuereinheit von dem oder den Ballensensoren empfangen werden. Die Ballenpressensteuereinheit kann konfiguriert sein mit dem Ballensignal das Volumen und/oder den Durchmesser und/oder den Radius und/oder die Masse des Ballens, und/oder die Spannung der Pressmittel und/oder die Verteilung des Ernteguts, insbesondere eine seitliche Verteilung des Ernteguts zu ermitteln, insbesondere zu berechnen. Der oder die Ballensensoren können beispielsweise ein Gewichtssensor und/oder ein Drucksensor und/oder ein Potentiometer und/oder ein Abstandssensor sein. Dadurch kann vorteilhafterweise der Gesamtenergiewert und/oder der Ballenpressenverbrauchswert und/oder der Ballenformungsdruck, insbesondere die Dichte des Ballens, geändert, insbesondere erhöht oder verringert werden, ohne dass sich die Ausgabegrösse ändert. Darüber hinaus muss die Ballenbildung nicht aufgrund einer Überlastung der Ballenpresse unterbrochen werden, beispielsweise um ein Abwürgen des Motors des Zugfahrzeugs proaktiv zu verhindern, und der gleichzeitig kann der Ballen mit der eingestellten Ausgabegrösse hergestellt werden.

In Ausgestaltung der Erfindung ist die Steuereinheit konfiguriert, mit dem oder basierend auf dem ersten Stellsignal und/oder dem Fahrsignal und/oder dem zweiten Stellsignal eine Dichte des Ballens, der insbesondere in der Presseinheit ausgebildet wird, einzustellen und/oder zu verstellen, insbesondere aufrechtzuerhalten, wenn der erste Energiewert von einem gegenwärtig benötigten Energiewert der Presseinheit (Energieschwellwert der Presseinheit) verschieden ist, insbesondere kleiner oder grösser ist. Dabei kann der Gesamtenergiewert vom Ballenpressenverbrauchswert verschieden oder gleich sein. Der gegenwärtig benötigter Energiewert oder Energieschwellwert kann die Energie und/oder die Kraft und/oder das Drehmoment und/oder die Drehzahl sein, die von der Presseinheit benötigt wird, um eine Dichte des in der Presseinheit geformten Ballens aufrechtzuerhalten, insbesondere eine konstante Dichte aufrechtzuerhalten.

Im Speziellen kann die Ballenpressensteuereinheit konfiguriert sein, das erste Stellsignal und/oder das Fahrsignal und/oder das zweite Stellsignal zu versenden, insbesondere an die Zugfahrzeugsteuereinheit, wenn der erste Energiewert von einem gegenwärtig benötigten Energiewert der Presseinheit verschieden ist. Die Zugfahrzeugsteuereinheit kann konfiguriert sein, mit dem oder basierend auf dem ersten Stellsignal und/oder dem Fahrsignal und/oder dem zweiten Stellsignal eine Dichte des Ballens, der insbesondere in der Presseinheit ausgebildet wird, einzustellen und/oder zu verstellen, insbesondere aufrechtzuerhalten, wenn der erste Energiewert von einem gegenwärtig benötigten Energiewert der Presseinheit verschieden ist.

Der Bedarf an Energie und/oder Kraft und/oder Drehmoment und/oder Drehzahl zur Aufrechterhaltung der Dichte des Ballens kann sich mit zunehmender Grösse des sich bildenden Ballens verändern, insbesondere steigen. Die Steuereinheit, oder insbesondere die Ballenpressensteuereinheit und die Zugfahrzeugsteuereinheit, kann deshalb konfiguriert sein, den Gesamtenergiewert und/oder den Ballenpressenverbrauchswert, und somit insbesondere den ersten Energiewert, und/oder den gegenwärtig benötigter Energiewert während der Ballenbildung einzustellen und/oder zu verstellen.

Dabei können sich die folgenden Anwendungsfälle ergeben:

1.) Der Gesamtenergiewert kann grösser als der Ballenpressenverbrauchswert sein, und der erste Energiewert kann kleiner als der gegenwärtig benötigten Energiewert sein. In diesem Fall kann die Ballenpressensteuereinheit konfiguriert sein, das Fahrsignal und/oder das erste und/oder zweite Stellsignal, insbesondere an die Zugfahrzeugsteuereinheit zu versenden. Im Weiteren kann die Steuereinheit oder die Ballenpressensteuereinheit und/oder die Zugfahrzeugsteuereinheit konfiguriert sein, insbesondere den ersten Energiewert mit dem Fahrsignal und/oder dem ersten und/oder zweiten Stellsignal zu erhöhen, sodass der erste Energiewert sich dem gegenwärtig benötigten Energiewert der Presseinheit (Energieschwellwert der Presseinheit) nähert oder gleich ist.

2.) Der Gesamtenergiewert kann grösser als der Ballenpressenverbrauchswert sein, und der erste Energiewert kann grösser als der gegenwärtig benötigten Energiewert sein. In diesem Fall kann die Ballenpressensteuereinheit konfiguriert sein, das Fahrsignal und/oder das erste und/oder zweite Stellsignal, insbesondere an die Zugfahrzeugsteuereinheit zu versenden. Im Weiteren kann die Steuereinheit oder die Ballenpressensteuereinheit und/oder die Zugfahrzeugsteuereinheit konfiguriert sein, den ersten Energiewert mit dem Fahrsignal und/oder dem ersten und/oder zweiten Stellsignal zu verringern, sodass erste Energiewert sich dem gegenwärtig benötigten Energiewert der Presseinheit (Energieschwellwert der Presseinheit) nähert oder gleich ist.

3.) Der Gesamtenergiewert kann kleiner als der Ballenpressenverbrauchswert sein, und der erste Energiewert kann kleiner als der gegenwärtig benötigten Energiewert sein. In diesem Fall kann die Ballenpressensteuereinheit konfiguriert sein, das Fahrsignal und/oder das erste und/oder zweite Stellsignal, insbesondere an die Zugfahrzeugsteuereinheit zu versenden. Im Weiteren kann die Steuereinheit oder die Ballenpressensteuereinheit und/oder die Zugfahrzeugsteuereinheit konfiguriert sein, den Ballenpressenverbrauchswert mit dem Fahrsignal zu verringern und/oder den Gesamtenergiewert mit der ersten Stellsignal zu erhöhen und/oder mit dem zweiten Stellsignal den ersten Energiewert zu erhöhen, sodass erste Energiewert sich dem gegenwärtig benötigten Energiewert der Presseinheit (Energieschwellwert der Presseinheit) nähert oder gleich ist.

4.) Der Gesamtenergiewert kann kleiner als der Ballenpressenverbrauchswert sein, und der erste Energiewert kann grösser als der gegenwärtig benötigten Energiewert sein. In diesem Fall kann die Ballenpressensteuereinheit konfiguriert sein, das Fahrsignal und/oder das erste und/oder zweite Stellsignal, insbesondere an die Zugfahrzeugsteuereinheit zu versenden. Im Weiteren kann die Steuereinheit oder die Ballenpressensteuereinheit und/oder die Zugfahrzeugsteuereinheit konfiguriert sein, den Ballenpressenverbrauchswert mit dem Fahrsignal zu verringern und/oder den Gesamtenergiewert mit dem ersten Stellsignal zu erhöhen und/oder mit dem zweiten Stellsignal den ersten Energiewert zu verringern, sodass erste Energiewert sich dem gegenwärtig benötigten Energiewert der Presseinheit (Energieschwellwert der Presseinheit) nähert oder gleich ist.

5.) Der Gesamtenergiewert kann gleich dem Ballenpressenverbrauchswert sein, und der erste Energiewert kann grösser als der gegenwärtig benötigten Energiewert sein. In diesem Fall kann die Ballenpressensteuereinheit konfiguriert sein, das Stellsignal, insbesondere an die Zugfahrzeugsteuereinheit zu versenden. Im Weiteren kann die Steuereinheit oder die Ballenpressensteuereinheit und/oder die Zugfahrzeugsteuereinheit konfiguriert sein, mit dem Stellsignal den ersten Energiewert zu verringern, sodass erste Energiewert sich dem gegenwärtig benötigten Energiewert der Presseinheit (Energieschwellwert der Presseinheit) nähert oder gleich ist.

6.) Der Gesamtenergiewert kann gleich dem Ballenpressenverbrauchswert sein, und der erste Energiewert kann kleiner als der gegenwärtig benötigten Energiewert sein. In diesem Fall kann die Ballenpressensteuereinheit konfiguriert sein, das Fahrsignal und/oder das erste und/oder zweite Stellsignal, insbesondere an die Zugfahrzeugsteuereinheit zu versenden. Im Weiteren kann die Steuereinheit oder die Ballenpressensteuereinheit und/oder die Zugfahrzeugsteuereinheit konfiguriert sein, den Ballenpressenverbrauchswert mit dem Fahrsignal zu verringern, und somit den ersten und zweiten Energiewert verringern, und/oder mit dem ersten Stellsignal den Gesamtenergiewert zu erhöhen und/oder mit dem zweiten Stellsignal den ersten Energiewert zu erhöhen, sodass erste Energiewert sich dem gegenwärtig benötigten Energiewert der Presseinheit (Energieschwellwert der Presseinheit) nähert oder gleich ist.

Dadurch kann vorteilhafterweise die Dichte des in der Presseinheit ausgebildeten Ballens aufrechterhalten werden und gleichzeitig eine Überlastung oder Unterlastung der Ballenpresse vermieden werden, und beispielsweise ein Abwürgen eines Motors eines Zugfahrzeugs proaktiv verhindert werden. Ausserdem kann vorteilhafterweise erreicht werden, dass der Ballen eine vorgebbare Dichte, insbesondere eine vorgebbare konstante Dichte aufweist.

In Ausgestaltung der Erfindung ist die Steuereinheit konfiguriert, mit dem oder basierend auf dem Fahrsignal eine Ein- und Ausgabeeinheit einzustellen und/oder zu verstellen und/oder anzusteuern, sodass die Ein- und Ausgabeeinheit dem Bediener signalisiert, die Geschwindigkeit des Zugfahrzeugs zu ändern. Die Steuereinheit kann zusätzlich oder alternativ konfiguriert sein, mit dem oder basierend auf dem Fahrsignal ein Operatorsignal an die Ein- und Ausgabeeinheit abzugeben oder zu senden. Die Ein- Ausgabeeinheit kann konfiguriert sein, mit dem oder basierend auf dem Operatorsignal dem Bediener zu signalisieren, die Geschwindigkeit des Zugfahrzeugs zu ändern. Der Bediener kann den Antriebsstrang des Zugfahrzeugs, insbesondere den Motor und/oder die Getriebeeinheit oder das Getriebe, basierend auf den Anweisungen bzw. den Signalen der Ein- und Ausgabeeinheit, einstellen und/oder verstellen und/oder ansteuern und eine Geschwindigkeit des Zugfahrzeugs einstellen und/oder verstellen. Der Bediener kann beispielsweise das Steuersignal an den Antriebsstrang, insbesondere den Motor und/oder die Getriebeeinheit oder das Getriebe des Zugfahrzeugs abgeben. Dadurch kann die Geschwindigkeit des Zugfahrzeugs geändert, insbesondere erhöht oder gesenkt werden, wodurch der Gesamtenergiewert angepasst werden kann. Durch Erhöhen der Geschwindigkeit des Zugfahrzeugs können der erste und/oder zweite Energiewert und/oder der Ballenpressenverbrauchwerts erhöht und durch Verringern der Geschwindigkeit des Zugfahrzeugs verringert werden. Insbesondere der zweite Energiewert wird durch die Dichte des geernteten Ernteguts, insbesondere des Schwad beeinflusst. Somit kann die Geschwindigkeit des Zugfahrzeugs erhöht werden, wenn sich ein Schwad mit geringer Dichte nähert, um einen gleichmäßigen Erntegutdurchsatz aufrechtzuerhalten. Umgekehrt kann die Geschwindigkeit des Zugfahrzeugs verringert werden, wenn sich ein Schwad mit hoher Dichte nähert, um einen gleichmäßigen Erntegutdurchsatz aufrechtzuerhalten. Insgesamt kann dadurch eine Überlastung oder Unterlastung der Ballenpresse bzw. der Kombination vermieden werden.

Die Erfindung betrifft weiter ein Verfahren zum Betrieb oder Betreiben einer Kombination, insbesondere einer Kombination nach einem der Ansprüche 1 bis 12. Das Verfahren kann dabei die folgenden Schritte umfassen. Die Steuereinheit oder die Zugfahrzeugsteuereinheit kann ein Energieverbrauchssignal oder ein Zapfwellenverbrauchssignal ermitteln und insbesondere an die Ballenpressensteuereinheit versenden. Die Ballenpressensteuereinheit kann das Energieverbrauchssignal oder das Zapfwellenverbrauchssignal von der Zugfahrzeugsteuereinheit zu empfangen. Die Ballenpressensteuereinheit oder die Steuereinheit kann mit dem Energieverbrauchssignal oder dem Zapfwellenverbrauchssignal einen Gesamtenergiewert ermitteln. Die Steuereinheit oder die Ballenpressensteuereinheit kann weiter den Gesamtenergiewert mit einem Ballenpressenverbrauchswert vergleichen und mit dem (oder basierend auf dem) ersten Stellsignal die Zapfwelleneinheit einstellen und/oder verstellen, wenn der Gesamtenergiewert vom Ballenpressenverbrauchswert verschieden ist. Das Verfahren weist alle Vorteile der erfindungsgemässen Kombination auf.

Die Erfindung betrifft weiter eine Ballenpresse, insbesondere eine Ballenpresse für eine Kombination nach einem der Ansprüche 1 bis 12.

Die Ballenpresse umfasst:

- eine Aufnahmeeinheit zum Aufnehmen eines Ernteguts vom Boden und zur Zufuhr des Ernteguts in eine Presseinheit, und
- die Presseinheit zum Aufnehmen des Ernteguts, insbesondere von der Aufnahmeeinheit, und zum Pressen oder Formen eines Ballens, und
- eine Steuereinheit oder eine Ballenpressensteuereinheit, die mit der Aufnahmeeinheit und der Presseinheit verbunden ist, bevorzugt signalverbunden und/oder wirkend gekoppelt und/oder signalübertragend und/oder datenleitend verbunden ist.

Die Aufnahmeeinheit und der Presseinheit können mit der Steuereinheit oder der Ballenpressensteuereinheit ansteuerbar und/oder einstellbar und/oder verstellbar sein.

Im Weiteren sind die Presseinheit mit einem ersten Energiewert und die Aufnahmeeinheit mit einem zweiten Energiewert antreibbar und/oder betreibbar. Die Steuereinheit oder die Ballenpressensteuereinheit ist konfiguriert:

- ein Energieverbrauchssignal oder ein Zapfwellenverbrauchssignal zu empfangen, und
- mit dem empfangenen Signal einen Gesamtenergiewert zu ermitteln, insbesondere zu bestimmen und/oder zu berechnen.

Die Steuereinheit oder die Ballenpressensteuereinheit ist weiter konfiguriert:

- den Gesamtenergiewert mit einem Ballenpressenverbrauchswert zu vergleichen, und
- ein erstes Stellsignal zum Einstellen und/oder Verstellen des Gesamtenergiewerts zu versenden, wenn der Gesamtenergiewert vom Ballenpressenverbrauchswert verschieden ist.

Die Steuereinheit oder die Ballenpressensteuereinheit kann zusätzlich konfiguriert sein, ein zweites Stellsignal zum Einstellen und/oder Verstellen der Dichte des Ballens zu versenden und/oder ein Fahrsignal zu versenden, wenn der Gesamtenergiewert vom Ballenpressenverbrauchswert verschieden ist.

Der erste Aktuator und/oder der zweite Aktuator und/oder der dritte Aktuator und/oder die GPS-Einrichtung und/oder die Ein- und Ausgabeeinheit und/oder die Erfassungseinrichtung und/oder das Bildverarbeitungssystem und/oder alle weiteren Sensoren, beispielsweise der oder die Ballensensoren und/oder Wickelsensoren und/oder Auswurfklappensensor und/oder der erste und/oder zweite Sensor und/oder der oder die Zapfwellensensoren und/oder der Geschwindigkeitssensor können mit der Ballenpressensteuereinheit und/oder der Zugfahrzeugsteuereinheit oder der Steuereinheit betreibbar, bevorzugt steuerbar und/oder regelbar, besonders bevorzugt ansteuerbar und/oder einstellbar und/oder verstellbar sein. Die Ballenpressensteuereinheit und die Zugfahrzeugsteuereinheit können verbunden, insbesondere signalverbunden und/oder wirkend gekoppelt und/oder signalübertragend und/oder datenleitend verbunden sein. Die Steuereinheit oder die Ballenpressensteuereinheit und die Zugfahrzeugsteuereinheit können Signale zur Steuerung des Betriebs der Kombination, insbesondere der Ballenpresse und/oder des Zugfahrzeugs liefern. Zweckmäßigerweise können die Signale über ein geeignetes Datenkommunikationsnetzwerk bereitgestellt werden, beispielsweise eines, das dem ISOBUS-Standard entspricht. Die Ballenpressensteuereinheit und die Zugfahrzeugsteuereinheit können aber auch als die Steuereinheit ausgebildet sein, d.h. insbesondere eine integrierte Steuereinheit ausbilden. Die Steuereinheit kann der Kombination, insbesondere dem Zugfahrzeug oder der Ballenpresse oder beiden gemeinsam, zugeordnet und/oder an oder in diesen angeordnet sein. Die Steuereinheit oder die Ballenpressensteuereinheit und/oder die Zugfahrzeugsteuereinheit können als ein elektronisches Modul, ein eingebettetes System, eine Recheneinheit, ein Computer, als ein Modul zum Steuern und/oder Regeln der Ballenpresse oder der Kombination, insbesondere des Zugfahrzeugs und/oder der Ballenpresse, ausgebildet sein. Die Steuereinheit oder die Ballenpressensteuereinheit und die Zugfahrzeugsteuereinheit können einen oder mehrere Prozessoren, einen Speicher und/oder alle Software, Hardware, Algorithmen, Anschlüsse, insbesondere auch Sensoren, umfassen, die für die Steuerung und/oder Regelung der Kombination erforderlich sind. Die Verfahren können als Programm oder Algorithmus ausgebildet sein, welches auf und/oder mit der Steuereinheit oder der Ballenpressensteuereinheit und der Zugfahrzeugsteuereinheit ausführbar sind. Die Steuereinheit oder die Ballenpressensteuereinheit und die Zugfahrzeugsteuereinheit können jedes Gerät umfassen, das Daten von verschiedenen Sensoren analysiert, Daten vergleichen und die erforderlichen Entscheidungen treffen, um den Betrieb der Kombination oder nur der Ballenpresse und die erforderlichen Aufgaben zur Steuerung und/oder Regelung des Betriebs der Kombination, zu steuern und/oder zu regeln und/oder auszuführen. Die Steuereinheit oder die Ballenpressensteuereinheit und die Zugfahrzeugsteuereinheit kann mit den Bauteilen der Ballenpressen, also insbesondere der Presseinheit und/oder der Aufnahmeeinheit und/oder der GPS-Einrichtung und/oder mit den Aktuatoren, im Speziellen mit deren Ventilen oder Ventilanordnungen, und/oder den Sensoren, beispielsweise dem oder den Ballensensoren und/oder einen oder mehreren Wickelsensoren und/oder Auswurfklappensensor und/oder dem ersten und/oder zweiten Sensor und/oder dem Zapfwellensensor und/oder dem Geschwindigkeitssensor verbunden sein, bevorzugt signalverbunden und/oder wirkend gekoppelt und/oder signalübertragend und/oder datenleitend verbunden sein. Die Zugfahrzeugsteuereinheit oder die Steuereinheit kann mit den Bauteilen des Zugfahrzeugs, also insbesondere der GPS-Einrichtung und/oder einer Lenkeinrichtung und/oder einem Lenkaktuator und/oder der Ein- und Ausgabeeinheit und/oder der Erfassungseinrichtung und/oder dem Bildverarbeitungssystem und/oder allen weiteren Sensoren verbunden sein, bevorzugt signalverbunden und/oder wirkend gekoppelt und/oder signalübertragend und/oder datenleitend verbunden sein. Die Steuereinheit kann mit allen oben genannten Komponenten der Ballenpressensteuereinheit und Zugfahrzeugsteuereinheit verbunden sein, insbesondere signalverbunden und/oder wirkend gekoppelt und/oder signalübertragend und/oder datenleitend verbunden. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit oder der Ballenpressensteuereinheit und/oder der Zugfahrzeugsteuereinheit stattfinden kann. Signale können beispielsweise von der Ballenpressensteuereinheit und der Zugfahrzeugsteuereinheit oder der Steuereinheit empfangen und versendet werden und/oder verarbeitet und/oder bearbeitet werden. Die Verbindung zwischen der Steuereinheit oder der Ballenpressensteuereinheit und der Zugfahrzeugsteuereinheit sowie den Bauteilen bzw. Komponenten des Zugfahrzeugs und/oder der Ballenpresse kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnliches sein kann. Die Steuereinheit oder die Zugfahrzeugsteuereinheit können unmittelbar mit der in einer Kabine des Zugfahrzeug angeordneten Ein- und Ausgabeeinheit in Verbindung stehen, durch welche von einer Bedienperson eingegebene Daten an die Ballenpressensteuereinheit und/oder die Zugfahrzeugsteuereinheit oder die Steuereinheit übertragen oder von dieser empfangen und ausgegeben werden können. Die Ballenpressensteuereinheit und/oder die Zugfahrzeugsteuereinheit oder die Steuereinheit können in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Fig. 1     eine schematische Darstellung eines ersten Ausführungsbeispiels einer erfindungsgemässen Ballenpresse, und

Fig. 2     eine schematische Darstellung des ersten Ausführungsbeispiels der erfindungsgemässen Kombination, und

Fig. 3     eine schematische Darstellung eines ersten Ausführungsbeispiels einer Antriebseinheit der erfindungsgemässen Kombination, und

Fig. 4     eine schematische Darstellung eines weiteren Ausführungsbeispiels einer Antriebseinheit der erfindungsgemässen Kombination, und

Fig. 5     ein schematisches Flussdiagramm des erfindungsgemässen Verfahrens zum Betreiben der Ballenpresse oder der Kombination.

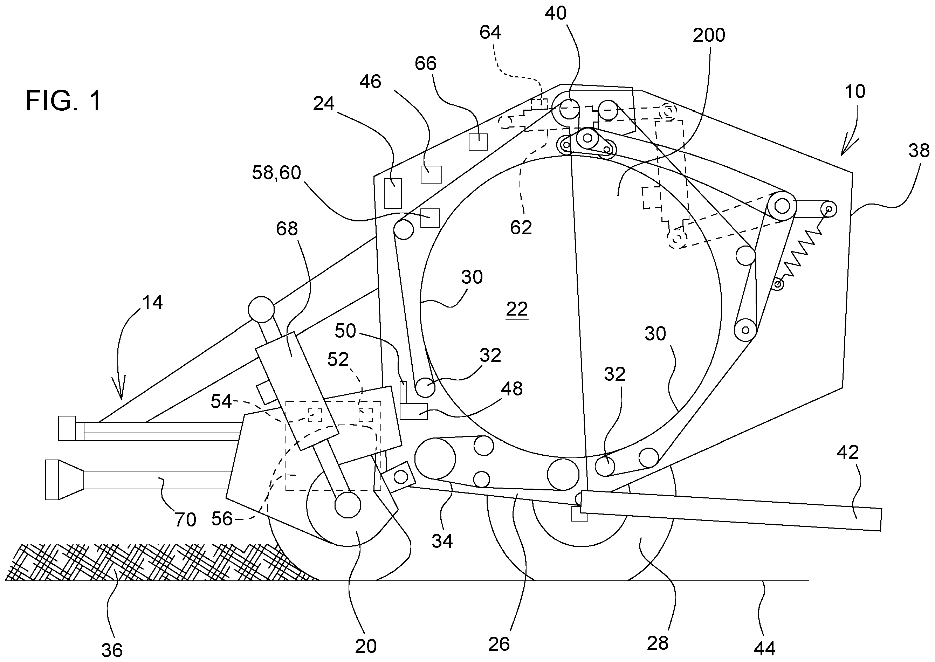

Figur 1 zeigt eine schematische Darstellung eines ersten Ausführungsbeispiels einer erfindungsgemässen Ballenpresse 10. Die Ballenpresse 10 umfasst eine Aufnahmeeinheit 20 zur Aufnahme von Erntegut vom Boden und zur Zufuhr des Ernteguts in eine Presseinheit 22. Die Ballenpresse 10 umfasst weiter die Presseinheit 22, um das aufgenommene Erntegut zu einem Ballen 200 zu formen bzw. zu pressen. Im Speziellen kann die Ballenpresse 10 eine Ballenpressensteuereinheit 24 oder eine Steuereinheit 104 umfassen. Die Ballenpresse 10 kann einen Ballenpressenrahmen 26 umfassen. Der Ballenpressenrahmen 26 kann auf Rädern 28 getragen sein. Die Presseinheit 22 kann am oder auf dem Ballenpressenrahmen 26 angeordnet, bevorzugt mit diesem verbunden und/oder an diesem befestigt und/oder getragen sein.

Die Ballenpresse 10 ist mit einer grössenveränderlichen Presseinheit 22 bzw. Presskammer ausgebildet. Das Pressmittel 30 ist als eines oder mehrere Bänder oder Gurte oder Riemen ausgebildet. Das Pressmittel 30 umgibt die Presseinheit 22 bzw. Presskammer und ist mit Rollen 32 geführt. Die Ballenpresse 10 kann aber auch eine grössenunveränderliche Presseinheit 22 bzw. Presskammer umfassen. Hierbei kann das Pressmittel als eine oder mehrere Pressrollen ausgebildet sein, insbesondere eine Vielzahl zueinander parallel verlaufender Pressrollen zum Pressen des Ernteguts.

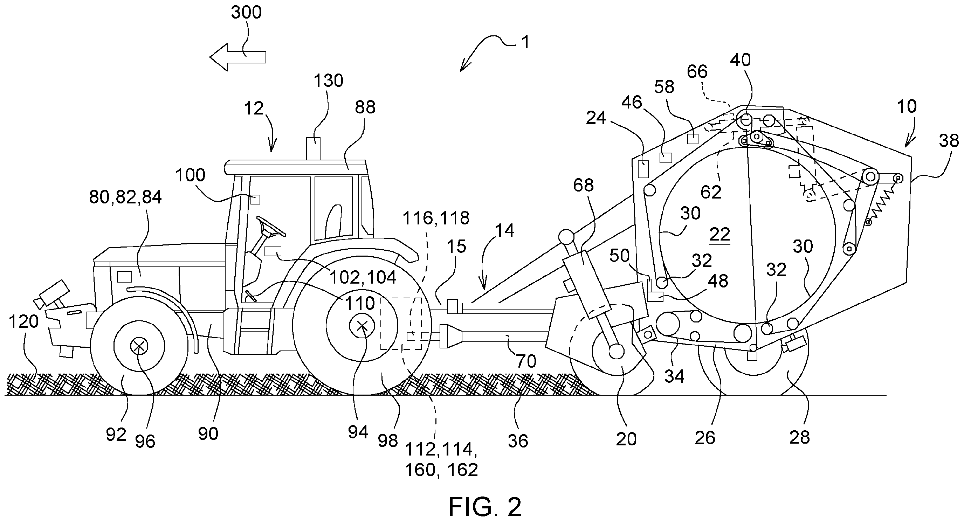

Die Aufnahmeeinheit 20, insbesondere in Form einer Pick-up, ist an der Ballenpresse 10 angeordnet und/oder mit dieser verbunden, insbesondere unterhalb der Vorderkante der Ballenpresse 10. Die Aufnahmeeinheit 20 kann sich um eine Querachse bewegenden oder drehenden Zinken umfassen. Der Aufnahmeeinheit 20 kann in einer Erntegutflussrichtung eine Fördereinheit, vorliegend ein Förderband 34, der Ballenpresse 10 folgen. Das Förderband 34 könnte auch durch einen Rotor (nicht gezeigt) ersetzt werden, oder ein Rotor könnte in Gutflussrichtung zwischen der Aufnahmeeinheit 20 und dem Förderband 34 eingefügt werden. Anstelle der Aufnahmeeinheit 20, insbesondere der Pickup, könnten auch andere geeignete Erntegutaufnahmemittel wie Mäh- und Fördereinheiten verwendet werden. Die Aufnahmeeinheit 20 sammelt Erntegut, das insbesondere in einer Schwade 36 beispielsweise aus Gras, Heu oder Stroh, auf dem Feld liegt, und führt es der Presseinheit 22 zu. Die Pressmittel 30 können während eines Ballenpressvorgangs in ihrer Längsrichtung in Bewegung versetzt werden, indem eine oder mehrere der Rollen 32 rotierend angetrieben werden. Das in die Presseinheit 22 eingeführte Erntegut dreht sich somit auch während des Pressens. Während des Pressenvorgangs nimmt die Größe der Presseinheit 22 mit der Zeit zu. Die Ballenpresse 10 umfasst eine Auswurfeinheit 38, beispielsweise eine Auswurfklappe oder ein Heckteil oder eine Heckklappe der Ballenpresse 10. Die Auswurfeinheit 38 ist schwenkbar an der Ballenpresse 10, insbesondere dem Ballenpressenrahmen 26 oder einem Gehäuseteil, gelagert. Die Auswurfeinheit 38 ist um eine Achse 40 schwenkbar, die sich quer zur Vorwärtsrichtung 300 eines Zugfahrzeugs 12 (siehe Figur 2) und/oder der Ballenpresse 10 erstreckt. Die Auswurfeinheit 38 ist zwischen einer ersten Position, in der die Presseinheit 22 geschlossen ist, und einer zweiten Position bewegbar, in der die Presseinheit 22 zum Entladen des Ballens geöffnet ist. Ausserdem kann die Ballenpresse 10 eine Rampe 42, um den Ballen 200 auf den Boden 44 abzulegen.

Die Ballenpresse 10 kann eine Wickeleinheit 48 umfassen. Die Wickeleinheit 48 kann an, insbesondere in der Nähe, der Presseinheit 22 angeordnet sein. Die Wickeleinheit 48 kann mit der Ballenpressensteuereinheit 24 oder der Steuereinheit 104 verbunden sein. Die Ballenpressensteuereinheit 24 oder die Steuereinheit 104 kann konfiguriert sein, die Wickeleinheit 48 einzustellen und/oder zu verstellen, um ein Wickelmaterial, beispielsweise Garn, Band, Netz oder Folie, an die Presseinheit 22 abzugeben. Der rotierende Ballen 200 kann an dem Wickelmaterial ziehen oder dieses einfangen, so dass es dann um den Ballen 200 gewickelt wird. Ein Wickelsensor 50 kann mit der Wickeleinheit 48 interagieren und erfassen, ob beispielsweise der Ballen 200 an der Verpackung zieht oder der Wickelvorgang abgeschlossen ist.

Die Presseinheit 22 ist mit einem ersten Energiewert und die Aufnahmeeinheit 20 ist mit einem zweiten Energiewert antreibbar. Die Ballenpressensteuereinheit 24 oder die Steuereinheit 104 kann mit der Aufnahmeeinheit 20 und der Presseinheit 22 verbunden, bevorzugt signalverbunden und/oder wirkend gekoppelt und/oder signalübertragend und/oder datenleitend verbunden sein.

Die Aufnahmeeinheit 20 und die Presseinheit 22 können mit der Steuereinheit oder der Ballenpressensteuereinheit 24 oder der Steuereinheit 104 ansteuerbar und/oder einstellbar und/oder verstellbar sein. Die Steuereinheit 104 oder die Ballenpressensteuereinheit 24 ist konfiguriert, ein Energieverbrauchssignal oder ein Zapfwellenverbrauchssignal zu empfangen, und mit dem empfangenen Signal einen Gesamtenergiewert zu ermitteln, insbesondere zu bestimmen und/oder zu berechnen. Die Steuereinheit 104 oder die Ballenpressensteuereinheit 24 ist weiter konfiguriert, den Gesamtenergiewert mit einem Ballenpressenverbrauchswert zu vergleichen, und ein erstes Stellsignal zum Einstellen und/oder Verstellen des Gesamtenergiewerts zu versenden, wenn der Gesamtenergiewert vom Ballenpressenverbrauchswert verschieden ist.

Figur 2 zeigt eine schematische Darstellung eines ersten Ausführungsbeispiels einer erfindungsgemässen Kombination 1 aus einem Zugfahrzeug 12 und einer mittels einer Deichsel 14 vom Zugfahrzeug 12 gezogenen erfindungsgemässen Ballenpresse 10, insbesondere gemäss Figur 1. Die in Figur 2 gezeigte Ballenpresse 10 entspricht im Wesentlichen der in Figur 1 gezeigten Ballenpresse 10, sodass im Folgenden lediglich auf Details und/oder Unterschiede eingegangen wird. Die in Figur 1 gezeigte Ballenpresse 10 kann die im Folgenden beschriebenen zusätzlichen Merkmale und Eigenschaften aufweisen.

Das Zugfahrzeug 12 kann den Antriebsstrang 80 umfassen. Das Zugfahrzeug 12, insbesondere das Antriebsstrang 80, kann den Motor 82, beispielsweise eine Verbrennungskraftmaschine oder einen Elektromotor umfassen. Das Zugfahrzeug 12, insbesondere der Antriebsstrang 80, kann ausserdem eine Getriebeeinheit 82, insbesondere ein Getriebe, umfassen. Die Kombination 1, insbesondere das Zugfahrzeug 12, umfasst die Ein- und Ausgabeeinheit 100 und die Steuereinheit 104. Die Kombination 1, insbesondere das Zugfahrzeug 12, kann aber auch die Zugfahrzeugsteuereinheit 102 umfassen. Die Ballenpressensteuereinheit 24 und die eine Zugfahrzeugsteuereinheit 102 können in die Steuereinheit 104 integriert sein. Die Steuereinheit 104 oder die Zugfahrzeugsteuereinheit 102 kann am oder im Zugfahrzeug 12 angeordnet sein. Die Steuereinheit 104 kann den Aufbau und alle Funktionalitäten und alle Verbindungen der Ballenpressensteuereinheit 24 und der Zugfahrzeugsteuereinheit 102 aufweisen und die genannten Sensoren und/oder Aktuatoren und/oder Ventile und/oder Ventilanordnungen ansteuern.

Der Antriebsstrang 80 und/oder seine Komponenten, beispielsweise der Antriebsmotor 82 und/oder die Getriebeeinheit 84, können mit der Steuereinheit 104 oder Zugfahrzeugsteuereinheit 102 verbunden und/oder ansteuerbar und/oder einstellbar und/oder verstellbar sein. Die der Steuereinheit 104 oder Zugfahrzeugsteuereinheit 102 können mit der Ein- und Ausgabeeinheit 100 verbunden, bevorzugt signalverbunden und/oder wirkend gekoppelt und/oder signalübertragend und/oder datenleitend verbunden sein. Mit der in einer Kabine 88 des Zugfahrzeugs 12 angeordneten Ein- und Ausgabeeinheit 100 können von einem Bediener der Kombination 1 in die Ein- und Ausgabeeinheit 100 eingegebene Daten und/oder Befehle an die Steuereinheit 104 oder die Zugfahrzeugsteuereinheit 102 übertragen oder von dieser empfangen werden. Ebenso können Daten und/oder Befehle mit der Ein- und Ausgabeeinheit 100 und ausgegeben werden.

Das Zugfahrzeug 12 kann einen Zugfahrzeugrahmen 90 umfassen, insbesondere auf dem Zugfahrzeugrahmen 90 getragen sein. Der Zugfahrzeugrahmen 90 kann auf Bodeneingriffsmittel getragen sein. Die Bodeneingriffsmittel, hier in Form von Vorderrädern 92 und Hinterrädern 94 dargestellt, stehen mit einem Untergrund zur Übertragung von Antriebskräften in Eingriff und/oder das Zugfahrzeug 12 stützt sich mit diesen auf dem Untergrund oder Boden ab. Die Bodeneingriffsmittel, insbesondere die Vorderräder 92 und Hinterräder 94 können lenkbar und/oder beweglich sein. Die Kabine 24 kann vom Zugfahrzeugrahmen 90 getragen sein. Ausserdem kann sich in der Kabine 24 eine Arbeitsstation des Bedieners und/oder die Ein- und Ausgabeeinheit 100 befinden. Das Zugfahrzeug 12 umfasst eine Vorderachse 96 und eine Hinterachse 98. Die Hinterachse 98 kann, insbesondere permanent, und die Vorderachse 96 kann nicht oder bedarfsweise zuschaltbar, insbesondere permanent, vom Antriebsstrang 80 angetrieben werden. Die Vorderachse 96, und/oder insbesondere die Hinterachse 98 können mit einer Lenkeinrichtung, besonders bevorzugt mit einem Lenkaktuator, einstellbar und/oder verstellbar sein. Die Kombination 1, insbesondere das Zugfahrzeug 12, ist vom oder mit dem Antriebsstrang 80, insbesondere dem Motor 82 antreibbar. Der Motor 82 kann dazu eine Drehzahl und/oder ein Drehmoment über die Getriebeeinheit 84 an die Vorder- und/oder Hinterachse 96, 98 und die Bodeneingriffsmittel übertragen, sodass die Kombination 1, insbesondere das Zugfahrzeug 12, angetrieben wird. Das Zugfahrzeug 12 kann beispielsweise auch ein Gaspedal 110 oder einen nicht gezeigten Handgashebel umfassen. Im Folgenden beziehen sich Richtungsangaben wie vorne und hinten, links und rechts auf die Vorwärtsrichtung 300 des Zugfahrzeugs 12, die in Fig. 2 nach links geht.

Die Ballenpresse 10 ist mit dem Zugfahrzeug 12 verbunden, und/oder insbesondere gekoppelt. Das Zugfahrzeug 12 ist durch die oder mit der Deichsel 14 mit der Ballenpresse 10 verbunden. Beispielsweise kann die Ballenpresse 10 mit der Deichsel 14 an eine Anhängerkupplung 15 (engl. Hitch) des Zugfahrzeugs 12 gekoppelt sein. Das Zugfahrzeug 12 kann die Ballenpresse 10 ziehen.

Die Steuereinheit 104 ist, ein Energieverbrauchssignal oder ein Zapfwellenverbrauchssignal zu empfangen oder zu ermitteln, und mit dem Energieverbrauchssignal oder dem Zapfwellenverbrauchssignal einen Gesamtenergiewert zu ermitteln. Die Steuereinheit 104 ist weiter konfiguriert, den Gesamtenergiewert mit einem Ballenpressenverbrauchswert zu vergleichen, und mit einem oder basierend auf einem ersten Stellsignal eine Zapfwelleneinheit 112 einzustellen und/oder zu verstellen, wenn der Gesamtenergiewert vom Ballenpressenverbrauchswert verschieden ist. Alternativ können aber auch die Ballenpressensteuereinheit 24 und die Zugfahrzeugsteuereinheit 102 diese Funktion übernehmen. Die Zugfahrzeugsteuereinheit 102 kann also konfiguriert sein, das Energieverbrauchssignal oder das Zapfwellenverbrauchssignal zu ermitteln, und die Ballenpressensteuereinheit 24 kann konfiguriert sein, das Energieverbrauchssignal oder das Zapfwellenverbrauchssignal von der Zugfahrzeugsteuereinheit 102 zu empfangen.

Die Zugfahrzeugsteuereinheit 102 kann also konfiguriert sein, das Energieverbrauchssignal oder das Zapfwellenverbrauchssignal zu ermitteln, und die Ballenpressensteuereinheit 24 kann konfiguriert sein, das Energieverbrauchssignal oder das Zapfwellenverbrauchssignal von der Zugfahrzeugsteuereinheit 102 zu empfangen. Die Ballenpressensteuereinheit 24 kann weiter konfiguriert sein, den Gesamtenergiewert mit einem Ballenpressenverbrauchswert zu vergleichen, und das erstes Stellsignal an die Zugfahrzeugsteuereinheit 102 senden, wenn der Gesamtenergiewert vom Ballenpressenverbrauchswert verschieden ist. Die Zugfahrzeugsteuereinheit 102 kann konfiguriert sein, mit dem oder basierend auf dem ersten Stellsignal die Zapfwelleneinheit 112 einzustellen und/oder zu verstellen, wenn der Gesamtenergiewert vom Ballenpressenverbrauchswert verschieden ist. Der Ballenpressenverbrauchswert kann gleich der Summe des ersten und zweiten Energiewertes sein. Die Steuereinheit 104 oder die Zugfahrzeugsteuereinheit 102 kann konfiguriert sein, eine Energie und/oder ein Drehmoment und/oder eine Kraft und/oder eine Drehzahl der Zapfwelleneinheit 112, insbesondere einer ersten Energiemaschine 160 oder eines Elektromotors 162 der Zapfwelleneinheit 112, zu erhöhen, wodurch die Gesamtenergie erhöht wird, insbesondere wenn der der Gesamtenergiewert kleiner als der oder gleich dem Ballenpressenverbrauchswert ist. Die Steuereinheit 104 oder die Zugfahrzeugsteuereinheit 102 kann konfiguriert sein, eine Energie und/oder ein Drehmoment und/oder eine Kraft und/oder eine Drehzahl der Zapfwelleneinheit 112, insbesondere der ersten Energiemaschine 160 oder des Elektromotors 162 der Zapfwelleneinheit 112, zu verringern, wodurch die Gesamtenergie verringert wird, insbesondere wenn der der Gesamtenergiewert grösser als der Ballenpressenverbrauchswert ist. Zusätzlich kann die Steuereinheit 104 konfiguriert sein, mit einem Fahrsignal eine Geschwindigkeit der Kombination 10 einzustellen und/oder zu verstellen, wenn der Gesamtenergiewert vom Ballenpressenverbrauchswert verschieden ist. Alternativ kann Die Ballenpressensteuereinheit 24 konfiguriert sein, den Gesamtenergiewert mit einem Ballenpressenverbrauchswert zu vergleichen, und das Fahrsignal an die Zugfahrzeugsteuereinheit 102 senden, wenn der Gesamtenergiewert vom Ballenpressenverbrauchswert verschieden ist. Die Zugfahrzeugsteuereinheit 102 oder die Steuereinheit 104 kann konfiguriert sein, mit dem oder basierend auf dem Fahrsignal die Kombination 1, bevorzugt das Zugfahrzeug 12, besonders bevorzugt den Antriebsstrang 80, beispielsweise den Motor 82 oder das Getriebe oder die Getriebeeinheit 84, einzustellen und/oder zu verstellen, wenn der Gesamtenergiewert vom Ballenpressenverbrauchswert verschieden ist.

Die Steuereinheit 104 oder die Zugfahrzeugsteuereinheit 102 kann konfiguriert sein, eine Energie und/oder ein Drehmoment und/oder eine Kraft und/oder eine Drehzahl des Antriebsstrangs 80, insbesondere des Motors 82 oder des Getriebes oder der Getriebeeinheit 84, zu verringern, wodurch der Ballenpressenverbrauchswert verringert wird, insbesondere wenn der der Gesamtenergiewert kleiner als der oder gleich dem Ballenpressenverbrauchswert ist. Die Steuereinheit 104 oder die Zugfahrzeugsteuereinheit 102 kann konfiguriert sein, eine Energie und/oder ein Drehmoment und/oder eine Kraft und/oder eine Drehzahl des Antriebsstrangs 80, insbesondere des Motors 82 oder des Getriebes oder der Getriebeeinheit 84, zu erhöhen, wodurch der Ballenpressenverbrauchswert erhöht wird, insbesondere wenn der der Gesamtenergiewert grösser als der Ballenpressenverbrauchswert ist. Zusätzlich kann die Steuereinheit 104 konfiguriert sein, den Gesamtenergiewert mit dem Ballenpressenverbrauchswert zu vergleichen, und mit einem zweiten Stellsignal eine Dichte des Ballens einzustellen und/oder zu verstellen, wenn der Gesamtenergiewert vom Ballenpressenverbrauchswert verschieden ist. Alternativ kann Die Ballenpressensteuereinheit 24 konfiguriert sein, den Gesamtenergiewert mit einem Ballenpressenverbrauchswert zu vergleichen, und mit dem zweiten Stellsignal eine Dichte des Ballens einzustellen und/oder zu verstellen, wenn der Gesamtenergiewert vom Ballenpressenverbrauchswert verschieden ist.

Die Zugfahrzeugsteuereinheit 102 oder die Steuereinheit 104 kann konfiguriert sein, mit dem oder basierend auf dem zweiten Stellsignal die Ballenpresse 10, bevorzugt einen ersten Aktuator 58, einzustellen und/oder zu verstellen, wenn der Gesamtenergiewert vom Ballenpressenverbrauchswert verschieden ist. Die Steuereinheit 104 oder die Zugfahrzeugsteuereinheit 102 kann konfiguriert sein, eine Energie und/oder ein Drehmoment und/oder eine Kraft des ersten Aktuators 58 zu verringern, wodurch der Druck bzw. der Ballenformungsdruck, und somit insbesondere Ballenpressenverbrauchswert, bevorzugt der erste Energiewert, verringert wird, insbesondere wenn der der Gesamtenergiewert kleiner als der oder gleich dem Ballenpressenverbrauchswert ist. Die Steuereinheit 104 oder die Zugfahrzeugsteuereinheit 102 kann konfiguriert sein, eine Energie und/oder ein Drehmoment und/oder eine Kraft des ersten Aktuators 58 zu erhöhen, wodurch der Druck bzw. der Ballenformungsdruck, und somit insbesondere Ballenpressenverbrauchswert, bevorzugt der erste Energiewert, erhöht wird, insbesondere wenn der der Gesamtenergiewert grösser als der Ballenpressenverbrauchswert ist.

Das Zugfahrzeug 12 umfasst die Zapfwelleneinheit 112. Die Zapfwelleneinheit 112 kann insbesondere ein Zapfwellengetriebe 118 und/oder eine Zapfwelle 116 und/oder die erste Energiemaschine 160 oder den Elektromotor 162 umfassen. Die Zapfwelleneinheit 112 ist mit der ersten Energiemaschine 160, insbesondere dem Elektromotor 162 antreibbar. Die Zapfwelleneinheit 112 ist mit der Ballenpresse 10 zum Antreiben der Presseinheit 22 und der Aufnahmeeinheit 20 mechanisch verbunden. Das Zugfahrzeug 12 umfasst den Zapfwellensensor 114 zur Erfassung, insbesondere zur direkten oder indirekten Erfassung, des Zapfwellenverbrauchssignals umfassen. Der Zapfwellensensor 114 kann mit der Zugfahrzeugsteuereinheit 102 oder der Steuereinheit 104 verbunden sein, bevorzugt signalverbunden und/oder wirkend gekoppelt und/oder signalübertragend und/oder datenleitend verbunden sein. Der Zapfwellensensor 114 kann eine Energie und/oder ein Drehmoment und/oder eine Drehzahl an oder in der Zapfwelleneinheit 112, insbesondere am oder in einem Zapfwellengetriebe 118 und/oder der Zapfwelle 116 und/oder der ersten Energiemaschine 160 oder dem Elektromotor 162, insbesondere in Form eines Zapfwellenverbrauchssignals, ermitteln.

Die Steuereinheit 104 oder die Zugfahrzeugsteuereinheit 102 kann konfiguriert sein, mit dem oder basierend auf dem Fahrsignal eine Ein- und Ausgabeeinheit 100 anzusteuern, sodass die Ein- und Ausgabeeinheit 100 dem Bediener signalisiert, eine Geschwindigkeit des Zugfahrzeugs 12 zu ändern bzw. die Ein- und Ausgabeeinheit 100 konfiguriert ist dem Bediener zu signalisieren, eine Geschwindigkeit des Zugfahrzeugs 12 zu ändern. Ebenso kann die Zugfahrzeugsteuereinheit 102 oder die Steuereinheit 104 konfiguriert sein, mit dem oder basierend auf dem Fahrsignal, ein Operatorsignal an die Ein- und Ausgabeeinheit 100 des Zugfahrzeugs 12 abzugeben oder zu senden, und die Ein- und Ausgabeeinheit konfiguriert sein, dem Bediener zu signalisieren, eine Geschwindigkeit des Zugfahrzeugs 12 zu ändern. Im Speziellen kann die Ballenpressensteuereinheit 24 oder die Steuereinheit 104 konfiguriert sein, eine Ausgabegrösse des vollständig ausgebildeten Ballens einzustellen, wobei die Ausgabegrösse definiert, wann der vollständig ausgebildete Ballen ausgegeben wird,

Die Steuereinheit 104, alternativ die Ballenpressensteuereinheit 24 und die Zugfahrzeugsteuereinheit 102, kann konfiguriert sein, mit dem oder basierend auf dem ersten Stellsignal die Zapfwelleneinheit 112 einzustellen und/oder zu verstellen und/oder mit dem oder basierend auf dem Fahrsignal eine Geschwindigkeit der Kombination 1 einzustellen und/oder zu verstellen und /oder mit dem oder basierend auf dem zweiten Stellsignal eine Dichte des Ballens einzustellen und/oder zu verstellen, und ohne die Ausgabegrösse nicht zu verändern, wenn der Gesamtenergiewert vom Ballenpressenverbrauchswert verschieden ist. Die Ausgabegrösse kann ein Volumen und/oder Durchmesser und/oder ein Radius und/oder eine Masse des Ballens, und/oder eine Spannung der Pressmittel und/oder eine Verteilung des Ernteguts, insbesondere eine seitliche Verteilung des Ernteguts im Schwad ist. Ebenso kann die Ballenpressensteuereinheit 24 oder die Steuereinheit 104 konfiguriert sein, mit dem zweiten Stellsignal eine Dichte des Ballens einzustellen und/oder zu verstellen, insbesondere aufrechtzuerhalten, wenn der erste Energiewert von einem gegenwärtig benötigten Energiewert der Presseinheit 22 verschieden ist.

Die Kombination 1, insbesondere die Ballenpresse 10, kann einen ersten Sensor 52 zur Erfassung des ersten Energiewertes der Presseinheit 22 und des zweiten Energiewertes der Aufnahmeeinheit 20 umfassen. Die Steuereinheit 104 oder die Ballenpressensteuereinheit 24 kann mit dem ersten Sensor 52 verbunden sein, bevorzugt signalverbunden und/oder wirkend gekoppelt und/oder signalübertragend und/oder datenleitend verbunden sein. Im Weiteren kann die Steuereinheit 104 oder die Ballenpressensteuereinheit 24 konfiguriert sein, anhand des Signals des ersten Sensors 52 die Summe des ersten und zweiten Energiewertes zu ermitteln. Alternativ oder zusätzlich kann die Kombination 1, insbesondere die Ballenpresse 10, den ersten Sensor 52 zur Erfassung des ersten Energiewertes der Presseinheit 22 und einen zweiten Sensor 54 zur Erfassung des zweiten Energiewertes der Aufnahmeeinheit 20 umfassen. Dabei kann die Steuereinheit mit dem ersten und zweiten Sensor 52, 54 verbunden sein, bevorzugt signalverbunden und/oder wirkend gekoppelt und/oder signalübertragend und/oder datenleitend verbunden sein. In diesem Fall kann die Steuereinheit 104 oder die Ballenpressensteuereinheit 24 konfiguriert sein, anhand der Signale des ersten und zweiten Sensors 52, 54 den ersten und zweiten Energiewert und die Summe des ersten und zweiten Energiewertes zu ermitteln. Die Ballenpresse 10 kann auch eine Antriebseinheit 56 umfassen, die mit der Presseinheit 22 und der Aufnahmeeinheit 20 mechanisch verbunden ist und mit der die Presseinheit 22 und Aufnahmeeinheit 20 antreibbar sein können.

Die Ballenpresse 10 kann einen oder mehrere Ballensensoren 46 umfassen, um die Ausgabegrösse, insbesondere an oder in der Presseinheit 22, zu erfassen bzw. mit dem die Ausgabegrösse erfasst wird. Die Steuereinheit 24 oder die Ballenpressensteuereinheit 24 kann mit dem Ballensensor 46 verbunden, bevorzugt signalverbunden und/oder wirkend gekoppelt und/oder signalübertragend und/oder datenleitend verbunden sein. Die Steuereinheit 24 oder die Ballenpressensteuereinheit 24 kann mit dem Ballensensor 46 beispielsweise mittels eines Kabels, insbesondere mit einem lösbaren Stecker, oder über eine Funkverbindung verbunden sein. Der Ballensensor 46 kann an oder in der Presseinheit 22 angeordnet sein, insbesondere in dieser befestigt. Die von den Ballensensor 46 erfasste Ausgabegrösse kann beispielsweise einem Bediener auf einer Ein- und Ausgabeeinheit 100 angezeigt werden.

Die Kombination 1, bevorzugt die Ballenpresse 10, besonders bevorzugt die Presseinheit 22, umfasst den ersten Aktuator 58 zum Einstellen und/oder Verstellen der Presseinheit 22. Der erste Aktuator 58 kann zum Einstellen und/oder Verstellen der Presseinheit 22, bevorzugt der Pressmittel, besonders bevorzugt des Drucks bzw. der Ballenformungsdrucks der Pressmittel, ausgebildet sein. Der erste Aktuator kann mit der Steuereinheit 104 oder der Ballenpressensteuereinheit 24 verbunden sein, insbesondere signalverbunden und/oder wirkend gekoppelt und/oder signalübertragend und/oder datenleitend verbunden sein. Die Ballenpresse 10, insbesondere die Presseinheit 22, umfasst ein erstes Ventil oder eine erste Ventilanordnung 60, insbesondere ein erstes Steuerventil, zum Ansteuern und/oder Einstellen und/oder Verstellen des ersten Aktuators. Das erste Ventil oder die erste Ventilanordnung 60 kann mit der Steuereinheit 104 oder der Ballenpressensteuereinheit 24 verbunden sein, insbesondere signalverbunden und/oder wirkend gekoppelt und/oder signalübertragend und/oder datenleitend verbunden sein. Die Steuereinheit 104 oder die Ballenpressensteuereinheit 24 kann konfiguriert sein in Abhängigkeit vom zweiten Stellsignal die Presseinheit 22, bevorzugt die Dichte des Ballens, besonders bevorzugt den Druck oder Ballenformungsdrucks der Pressmittel einzustellen und/oder zu verstellen, insbesondere wenn der Gesamtenergiewert vom Ballenpressenverbrauchswert verschieden ist. Der erste Aktuator 58 ist in Form eines Hydraulikzylinders ausgebildet.

Die Steuereinheit 24 oder die Ballenpressensteuereinheit 24 kann mit einem zweiten Aktuator 62, insbesondere einem Hydraulikzylinder, verbunden, bevorzugt signalverbunden und/oder wirkend gekoppelt und/oder signalübertragend und/oder datenleitend verbunden. Die Steuereinheit 24 kann insbesondere über ein Ventil oder eine zweite Ventilanordnung 64 mit dem zweiten Aktuator 62 verbunden sein. Die Auswurfeinheit 38 ist mit dem zweiten Aktuator 62 zwischen der ersten Position, in der die Presseinheit 22 geschlossen ist, und der zweiten Position bewegbar, in der die Presseinheit 22 zum Entladen des Ballens geöffnet ist. Der zweite Aktuator 62 in Form eines Hydraulikzylinders ist mit einem Ende mit der Ballenpresse 10, beispielsweise mit dem Ballenpressenrahmen 26 bzw. dem Gehäuse, und mit einem zweiten Ende mit der Auswurfeinheit 38 verbunden, insbesondere schwenkbar verbunden oder befestigt. Die Auswurfeinheit 38 kann aber auch schwenkbar angelenkt, also an einem Angelpunkt schwenkbar befestigt sein. Der zweite Aktuator 62 kann mit der Auswurfeinheit 38 derart verbunden sein, dass er die Auswurfeinheit 38 um die Achse 40 nach oben (in Fig. 1 gegen den Uhrzeigersinn) schwenken kann, sodass der Ballen 200 aus der Presseinheit 22 auswerfbar ist. Die Auswurfeinheit 38 kann also mit dem Zweiten Aktuator 62 geöffnet oder geschlossen bzw. angehoben und abgesenkt werden. Der Zweiten Aktuator 62 kann mit der Steuereinheit 104 oder der Ballenpressensteuereinheit 24 mit oder über die Ventilanordnung 64, beispielsweise über eine elektromagnetische oder eine hydraulische Ventilanordnung, eingestellt und/oder verstellt und/oder angesteuert werden. Die Ventilanordnung 64 kann dabei mit der Steuereinheit 104 oder der Ballenpressensteuereinheit 24 eingestellt und/oder verstellt und/oder angesteuert werden. Ein Auswurfklappensensor 66 kann beispielsweise die Position des zweiten Aktuators 62 oder der Auswurfeinheit 38 erfassen. Die Auswurfeinheit 38, insbesondere der zweite Aktuator 62, kann mit der Ballenpressensteuereinheit 24 derart betreibbar, insbesondere einstellbar und/oder verstellbar und/oder ansteuerbar sein, dass die Auswurfeinheit 38, insbesondere der zweite Aktuator 62, zwischen einer ersten Position (Ballenpresse geschlossen) und einer zweiten Position (Ballenpresse geöffnet) bewegt wird.

Die Aufnahmeeinheit 20 kann beispielsweise mit einem dritten Aktuator 68, hier in Form eines Hydraulikzylinders, angehoben und abgesenkt werden. Der dritte Aktuator 68 kann mit der Steuereinheit 104 oder der Ballenpressensteuereinheit 24, beispielsweise über eine dritte Ventilanordnung oder ein drittes Ventil (nicht dargestellt), eingestellt und/oder verstellt und/oder angesteuert werden. Die dritte Ventilanordnung kann beispielsweise eine hydraulische oder elektromagnetische Ventilanordnung sein. Die dritte Ventilanordnung kann mit der Steuereinheit 104 oder der Ballenpressensteuereinheit 24 eingestellt und/oder verstellt und/oder angesteuert werden.

Die Kombination 1, bevorzugt das Zugfahrzeug 12, kann eine Erfassungseinrichtung 120, hier als eine Kamera ausgebildet, umfassen. Die Erfassungseinrichtung 120 kann, wie gezeigt, an die Vorderseite des Zugfahrzeugs 12, montiert sein. Die Erfassungseinrichtung 120 ist auf die Schwade 36 gerichtet. Die Erfassungseinrichtung 120 bzw. die Kamera liefert ein Erfassungssignal bzw. ein Videosignal an die Zugfahrzeugsteuereinheit 102 oder die Steuereinheit 104 oder ein Bildverarbeitungssystem (nicht gezeigt). Das Erfassungssignal bzw. Videosignal kann im Bildverarbeitungssystem verarbeitet werden. Das Bildverarbeitungssystem kann insbesondere als Teil der Zugfahrzeugsteuereinheit 102 oder die Steuereinheit 104 ausgebildet sein, um eine elektronische Angabe über die Position des Zugfahrzeugs 12 in Bezug auf die Schwade 36 bereitzustellen. Das Bildverarbeitungssystem kann ausserdem eine Solllinie des Schwads, insbesondere eine Längsmittelachse des Schwads bestimmen.

Ebenso kann das Bildverarbeitungssystem ein Lenksignal an eine Lenksteuerung der Kombination 1 und/oder die Zugfahrzeugsteuereinheit 102 oder die Steuereinheit 104 senden bzw. die Zugfahrzeugsteuereinheit 102 oder die Steuereinheit 104 können das Lenksignal empfangen. Das Lenksignal kann aber auch von Zugfahrzeugsteuereinheit 102 oder die Steuereinheit 104 mit oder in Abhängigkeit vom Erfassungssignal oder der Solllinie des Schwads erzeugt oder generiert werden. Die Zugfahrzeugsteuereinheit 102 oder die Steuereinheit 104 kann eine Lenksteuerung umfassen bzw. die Lenksteuerung kann als Teil der Zugfahrzeugsteuereinheit 102 oder die Steuereinheit 104 ausgebildet sein, also in die Zugfahrzeugsteuereinheit 102 oder die Steuereinheit 104 integriert sein. Dadurch kann die Zugfahrzeugsteuereinheit 102 oder die Steuereinheit 104 die Kombination 1 entlang des Schwads 36, insbesondere der Solllinie des Schwads oder der Längsmittelachse des Schwads lenken.

Die Kombination 1, insbesondere das Zugfahrzeug 12, kann auch eine GPS-Einrichtung 32 zur Bestimmung der Position der Kombination 1 in Form eines Positionssignals umfassen. Die Zugfahrzeugsteuereinheit 102 oder die Steuereinheit 104 ist mit der GPS-Einrichtung 130 verbunden. Die Zugfahrzeugsteuereinheit 102 oder die Steuereinheit 104 empfängt das Positionssignal von der GPS-Einrichtung 130. Mit der GPS-Einrichtung 130 oder der Zugfahrzeugsteuereinheit 102 oder der Steuereinheit 104 könne also Positionsdaten versendbar und/oder empfangbar sein, und/oder insbesondere berechenbar sein. Die GPS-Einrichtung 32 kann beispielsweise einen Positionsdaten empfangende GPS-Antenne und einen Speicher umfassen. Im Speicher der GPS-Einrichtung 130 oder der Zugfahrzeugsteuereinheit 102 oder der Steuereinheit 104 kann die Position des Schwads 36 gespeichert sein, die aus früheren Arbeitsgängen bekannt ist. Die Kombination 1, insbesondere das Zugfahrzeug 12, kann dann so gelenkt werden, dass die Position der Kombination 1 oder des Zugfahrzeugs 12, die von der GPS-Einrichtung 130 bereitgestellt werden, und die Position des Schwads 36 aus dem Speicher übereinstimmen. Lenkdaten könnten auch durch die Zugfahrzeugsteuereinheit 102 oder die Steuereinheit 104 und/oder durch die Lenksteuerung bestimmt und/oder ermittelt, und/oder berechnet werden. Ein Vorteil der vorliegenden Erfindung besteht darin, dass eine Überlastung oder Unterlastung der Ballenpresse 10 bzw. der Kombination 1 vermieden werden kann.

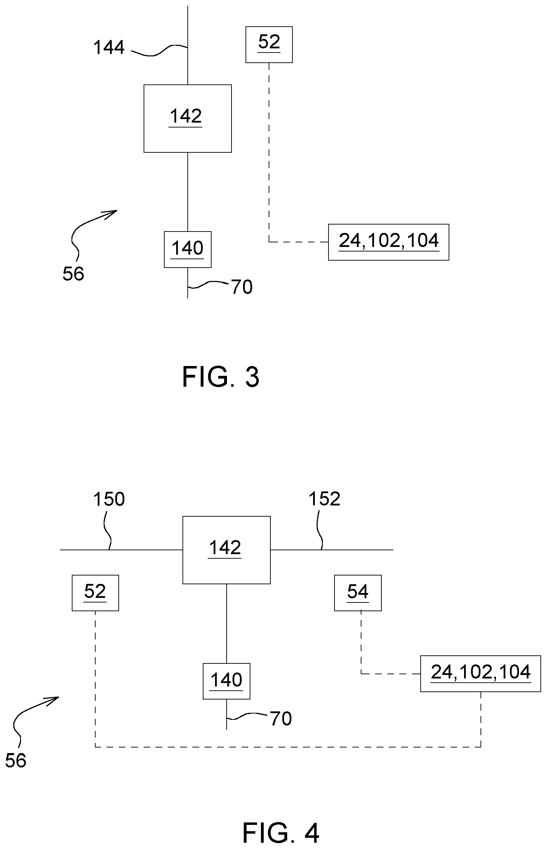

Figur 3 zeigt eine schematische Darstellung eines ersten Ausführungsbeispiels einer Antriebseinheit 56 der erfindungsgemässen Ballenpresse 10. Die in den Figuren 1 und 2 gezeigte Ballenpressen 10 können kann die in Figur 3 gezeigte Antriebseinheit 56 umfassen.

Die Ballenpresse 10 umfasst eine Antriebseinheit 56, die mit der Presseinheit 22 und der Aufnahmeeinheit 20 mechanisch verbunden ist und mit der die Presseinheit 22 und die Aufnahmeeinheit 20 antreibbar sind. Die Antriebseinheit 56 umfasst die Eingangswelle 70 und eine optionale Überlastkupplung 140 und eine Ausgangswelle 144, wobei die Presseinheit 22 und die Aufnahmeeinheit 20 von oder mit der Antriebseinheit 56 mit der Ausgangswelle 144 antreibbar sein können. Die Antriebseinheit 56 kann von oder mit der Zapfwelleneinheit 112 antreibbar sein. Im Speziellen kann die Eingangswelle 70 mit der Zapfwelle 116 mechanisch verbunden sein und/oder von oder mit der Zapfwelle 116 antreibbar sein. An oder in der Eingangswelle 70 ist die optionale Überlastkupplung 140 angeordnet oder die Eingangswelle 70 kann diese umfassen. Ausserdem umfasst die Antriebseinheit 56 eine optionale Getriebeeinrichtung 142. Die Getriebeeinrichtung 142 ist mit der Eingangswelle 70 mechanisch verbunden sein und/oder über die oder mit der Eingangswelle 70 antreibbar sein. Die Getriebeeinrichtung ist mit der Ausgangswelle 144 mechanisch verbunden.

Die Kombination, insbesondere die Ballenpresse 10, kann einen ersten Sensor 52 zur Erfassung des ersten Energiewertes der Presseinheit 22 und zur Erfassung des zweiten Energiewertes der Aufnahmeeinheit 20 umfassen. Die Steuereinheit 104 oder die Ballenpressensteuereinheit 24 ist mit dem ersten Sensor 52 verbunden, bevorzugt signalverbunden und/oder wirkend gekoppelt und/oder signalübertragend und/oder datenleitend verbunden. Die Steuereinheit 104 oder die Ballenpressensteuereinheit 24 ist konfiguriert, anhand des Signals des ersten Sensors 52 die Summe des ersten und zweiten Energiewertes zu ermitteln, insbesondere an der Ausgangswelle 144 oder der Getriebeeinheit der Antriebseinheit.

Figur 4 zeigt eine schematische Darstellung eines weiteren Ausführungsbeispiels einer Antriebseinheit 56 der erfindungsgemässen Ballenpresse 10. Die in den Figuren 1 bis 2 gezeigte Ballenpressen 10 können die in Figur 4 gezeigte Antriebseinheit 56 umfassen. Die in Figur 4 gezeigte Antriebseinheit 56 entspricht im Wesentlichen der in Figur 3 gezeigten Antriebseinheit 56, sodass im Folgenden lediglich auf Details und/oder Unterschiede eingegangen wird.

Die Antriebseinheit 56 umfasst die Eingangswelle 70 und die optionale Überlastkupplung 140 und eine erste und zweite Antriebswelle 150, 152. Dabei kann die Presseinheit 22 von oder mit der Antriebseinheit mit der ersten Antriebswelle 150, insbesondere mit einem ersten Energiewert, antreibbar sein. Die Aufnahmeeinheit 20 kann von oder mit der Antriebseinheit 56 mit der zweiten Antriebswelle 152, insbesondere mit dem zweiten Energiewert, antreibbar sein. Getriebeeinrichtung 142 kann mit der ersten und/oder zweiten Antriebswelle 150, 152 mechanisch verbunden sein. Die erste und/oder zweite Antriebswelle 150, 152 können über die oder mit der Getriebeeinrichtung 142 antreibbar sein. Die Ballenpresse 10 umfasst einen ersten Sensor 52 zur Erfassung des ersten Energiewertes der Presseinheit 22 und einen zweiten Sensor 54 zur Erfassung des zweiten Energiewertes der Aufnahmeeinheit 20. Die Steuereinheit 104 oder die Ballenpressensteuereinheit 24 ist mit dem ersten und zweiten Sensor 52, 54 verbunden, bevorzugt signalverbunden und/oder wirkend gekoppelt und/oder signalübertragend und/oder datenleitend verbunden.

Die Steuereinheit 104 oder die Ballenpressensteuereinheit 24 ist konfiguriert, anhand der oder mit den Signalen des ersten und zweiten Sensors 52, 54 den ersten und zweiten Energiewert und die Summe des ersten und zweiten Energiewertes zu ermitteln. Somit ist der erste Energiewert mit dem ersten Sensor 52 an der ersten Antriebswelle 150 der Antriebseinheit 56 ermittelbar ist und der zweite Energiewert mit dem zweiten Sensor 54 an einer zweiten Antriebswelle 152 der Antriebseinheit 56 ermittelbar ist

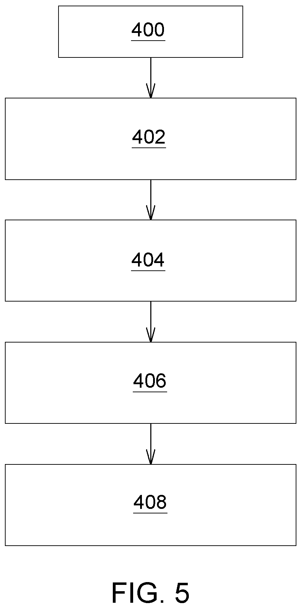

Figur 5 zeigt ein schematisches Flussdiagramm des erfindungsgemässen Verfahren zum Betreiben der erfindungsgemässen Ballenpresse 10 oder der erfindungsgemässen Kombination 1. Die in Figur 5 gezeigte Arbeitsweise ist mit den in den Figuren 1 bis 4 gezeigten Ballenpressen 10 und/oder Kombinationen 1 durchführbar.

Nach dem Start im Schritt 400 folgt der Schritt 402, in dem die Zugfahrzeugsteuereinheit 102 oder der Steuereinheit 104 oder der Zugfahrzeugsteuereinheit 102 ein Energieverbrauchssignal oder ein Zapfwellenverbrauchssignal ermittelt. Die Zugfahrzeugsteuereinheit 102 kann das Energieverbrauchssignal oder das Zapfwellenverbrauchssignal an die Ballenpressensteuereinheit 24 übermitteln, insbesondere senden und das Energieverbrauchssignal oder das Zapfwellenverbrauchssignal von der Ballenpressensteuereinheit 24 empfangen werden. Im folgenden Schritt 404 wird von der Ballenpressensteuereinheit 24 oder der Steuereinheit 104 mit dem empfangenen Signal einen Gesamtenergiewert ermittelt und der Gesamtenergiewert mit einem Ballenpressenverbrauchswert verglichen.

In Schritt 406 wird mit dem oder basierend auf dem ersten Stellsignal die Zapfwelleneinheit 112 eingestellt und/oder verstellt, wenn der Gesamtenergiewert vom Ballenpressenverbrauchswert verschieden ist. Alternativ kann die Ballenpressensteuereinheit 24 das erste Stellsignal versenden und die Zugfahrzeugsteuereinheit 102 empfängt das erste Stellsignal. Mit dem oder basierend auf dem ersten Stellsignal kann die Zugfahrzeugsteuereinheit 102 die Zapfwelleneinheit 112 einstellen und/oder verstellen.

Zusätzlich kann gemäss dem optionalen Schritt 408 die Zugfahrzeugsteuereinheit 102 oder die Steuereinheit 104 mit dem oder basierend auf dem Fahrsignal eine Geschwindigkeit des Zugfahrzeugs 12 eingestellt und/oder verstellt werden. Ebenso kann die Ballenpressensteuereinheit 24 oder die Steuereinheit 104 mit dem oder basierend auf dem zweiten Stellsignal eine Dichte des Ballens eingestellt und/oder verstellt werden.

Dadurch kann vorteilhafterweise eine Überlastung oder Unterlastung der Ballenpresse 10 bzw. der Kombination 1 vermieden werden und der Betrieb der Ballenpresse 10 bzw. Kombination 1 optimiert werden.

**Patentansprüche**

1. Zugfahrzeug-Ballenpressen-Kombination, umfassend ein Zugfahrzeug (12) und eine Ballenpresse (10), wobei das Zugfahrzeug (12) eine Zapfwelleneinheit (112) umfasst, und die Ballenpresse eine Aufnahmeeinheit (20), zum Aufnehmen eines Ernteguts vom Boden und zur Zufuhr des Ernteguts in eine Presseinheit (22), und die Presseinheit (22), zum Aufnehmen des Ernteguts von der Aufnahmeeinheit und zum Pressen eines Ballens, umfasst, und die Kombination eine Steuereinheit (104) umfasst, die mit der Zapfwelleneinheit (112) verbunden ist, wobei die Zapfwelleneinheit (112) mit der Ballenpresse (10) zum Antreiben der Presseinheit (22) und der Aufnahmeeinheit (20) mechanisch verbunden ist, und die Presseinheit (22) mit einem ersten Energiewert und die Aufnahmeeinheit (20) mit einem zweiten Energiewert antreibbar sind, und die Steuereinheit (104) konfiguriert ist, ein Energieverbrauchssignal oder ein Zapfwellenverbrauchssignal zu empfangen oder zu ermitteln, und mit dem Energieverbrauchssignal oder dem Zapfwellenverbrauchssignal einen Gesamtenergiewert zu ermitteln, **dadurch gekennzeichnet, dass** die Steuereinheit (104) weiter konfiguriert ist, den Gesamtenergiewert mit einem Ballenpressenverbrauchswert zu vergleichen, und mit einem ersten Stellsignal die Zapfwelleneinheit (112) einzustellen und/oder zu verstellen, wenn der Gesamtenergiewert vom Ballenpressenverbrauchswert verschieden ist.

2. Kombination nach Anspruch 1, **dadurch gekennzeichnet, dass** die Steuereinheit (104) konfiguriert ist, mit einem Fahrsignal eine Geschwindigkeit der Kombination (10) einzustellen und/oder zu verstellen, wenn der Gesamtenergiewert vom Ballenpressenverbrauchswert verschieden ist.

3. Kombination nach Anspruch 1 oder 2, **dadurch gekennzeichnet, dass** Steuereinheit (104) konfiguriert ist, den Gesamtenergiewert mit einem Ballenpressenverbrauchswert zu vergleichen, und mit einem zweiten Stellsignal eine Dichte des Ballens einzustellen und/oder zu verstellen, wenn der Gesamtenergiewert vom Ballenpressenverbrauchswert verschieden ist.

4. Kombination nach mindestens einem der vorangehenden Ansprüche, **dadurch gekennzeichnet, dass** der Ballenpressenverbrauchswert gleich der Summe des ersten und zweiten Energiewertes ist.

5. Kombination nach mindestens einem der vorangehenden Ansprüche, **dadurch gekennzeichnet, dass** die Kombination (1) einen ersten Sensor (52) zur Erfassung des ersten Energiewertes der Presseinheit (22) und zur Erfassung des zweiten Energiewertes der Aufnahmeeinheit (20) umfasst, wobei die Steuereinheit (104) mit dem ersten Sensor (52) verbunden ist, und die Steuereinheit (104) konfiguriert ist, anhand des Signals des ersten Sensors (52) die Summe des ersten und zweiten Energiewertes zu ermitteln.

6. Kombination nach mindestens einem der vorangehenden Ansprüche, **dadurch gekennzeichnet, dass** die Kombination (1) einen ersten Sensor (52) zur Erfassung des ersten Energiewertes der Presseinheit (22) und einen zweiten Sensor (54) zur Erfassung des zweiten Energiewertes der Aufnahmeeinheit (20) umfasst, wobei die Steuereinheit (104) mit dem ersten und zweiten Sensor (52, 54) verbunden ist, und die Steuereinheit (104) konfiguriert ist, anhand der Signale des ersten und zweiten Sensors (52, 54) den ersten und zweiten Energiewert und die Summe des ersten und zweiten Energiewertes zu ermitteln.

7. Kombination nach mindestens einem der vorangehenden Ansprüche, **dadurch gekennzeichnet, dass** die Kombination (1) eine Antriebseinheit (56) umfasst, die mit der Presseinheit (22) und der Aufnahmeeinheit (20) mechanisch verbunden ist und mit der die Presseinheit (22) und die Aufnahmeeinheit (20) antreibbar sind.

8. Kombination nach mindestens einem der vorangehenden Ansprüche, **dadurch gekennzeichnet, dass** der erste Energiewert mit dem ersten Sensor (52) an einer ersten Antriebswelle (150) der Antriebseinheit (56) ermittelbar ist und der zweite Energiewert mit dem zweiten Sensor (54) an einer zweiten Antriebswelle (152) der Antriebseinheit (56) ermittelbar ist oder die Summe des ersten und zweiten Energiewerts mit dem ersten Sensor (52) an einer Ausgangswelle (144) oder Getriebeeinheit der Antriebseinheit (56) ermittelbar ist.

9. Kombination nach mindestens einem der vorangehenden Ansprüche, **dadurch gekennzeichnet, dass** die Steuereinheit (104) konfiguriert ist:
eine Ausgabegrösse des vollständig ausgebildeten Ballens (200) einzustellen, wobei die Ausgabegrösse definiert, wann der vollständig ausgebildete Ballen ausgegeben wird, und mit dem ersten Stellsignal die Zapfwelleneinheit (112) einzustellen und/oder zu verstellen und/oder mit dem Fahrsignal eine Geschwindigkeit der Kombination (1) einzustellen und/oder zu verstellen und /oder mit dem zweiten Stellsignal eine Dichte des Ballens (200) einzustellen und/oder zu verstellen, und die Ausgabegrösse nicht zu verändern, wenn der Gesamtenergiewert vom Ballenpressenverbrauchswert verschieden ist.

10. Kombination nach mindestens einem der vorangehenden Ansprüche, **dadurch gekennzeichnet, dass** die Ausgabegrösse ein Volumen und/oder Durchmesser und/oder ein Radius und/oder eine Masse des Ballens (200) und/oder eine Spannung der Pressmittel (30) und/oder eine Verteilung des Ernteguts, insbesondere eine seitliche Verteilung des Ernteguts im Schwad (36) ist.

11. Kombination nach mindestens einem der vorangehenden Ansprüche, **dadurch gekennzeichnet, dass** die Steuereinheit (104) konfiguriert ist, mit dem zweiten Stellsignal eine Dichte des Ballens (200) einzustellen und/oder zu verstellen, insbesondere aufrechtzuerhalten, wenn der erste Energiewert von einem gegenwärtig benötigten Energiewert der Presseinheit (22) verschieden ist.

12. Kombination nach mindestens einem der vorangehenden Ansprüche, **dadurch gekennzeichnet, dass** die Steuereinheit (104) konfiguriert ist, basierend auf dem Fahrsignal eine Ein- und Ausgabeeinheit (100) anzusteuern, sodass die Ein- und Ausgabeeinheit (100) dem Bediener signalisiert, eine Geschwindigkeit des Zugfahrzeugs (12) zu ändern.

13. Verfahren zum Betreiben einer Zugfahrzeug-Ballenpressen-Kombination (1) nach einem der Ansprüche 1 bis 12.

14. Ballenpresse für eine Zugfahrzeug-Ballenpressen-Kombination (1) nach einem der Ansprüche 1 bis 12

FIG. 1

FIG. 2

EP 4 640 039 A1

144

52

142

24,102,104

140

70

56

## FIG. 3

150    152

142

52    54

24,102,104

140

70

56

## FIG. 4

```
┌──────────────────┐
│       400        │
└──────────────────┘
         │
         ▼
┌──────────────────────────┐
│           402            │
└──────────────────────────┘
         │
         ▼
┌──────────────────────────┐
│           404            │
└──────────────────────────┘
         │
         ▼
┌──────────────────────────┐
│           406            │
└──────────────────────────┘
         │
         ▼
┌──────────────────────────┐
│           408            │
└──────────────────────────┘
```

FIG. 5

Europäisches Patentamt
European Patent Office
Office européen des brevets

# EUROPÄISCHER RECHERCHENBERICHT

Nummer der Anmeldung

EP 24 17 2595

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2023/363317 A1 (SHONK JASON L [US] ET AL) 16. November 2023 (2023-11-16) * das ganze Dokument * ----- | 1-14 | INV. A01F15/08 |
| A | US 2023/354751 A1 (OSTERMANN PHILIPPE [FR] ET AL) 9. November 2023 (2023-11-09) * das ganze Dokument * ----- | 1-14 | |
| A | US 2014/373737 A1 (OLANDER BRIAN [US] ET AL) 25. Dezember 2014 (2014-12-25) * das ganze Dokument * ----- | 1-14 | |
| A | EP 2 745 674 B1 (CNH IND BELGIUM NV [BE]) 18. November 2015 (2015-11-18) ----- | 1-14 | |
| A | EP 4 018 814 A1 (CNH IND BELGIUM NV [BE]) 29. Juni 2022 (2022-06-29) * das ganze Dokument * ----- | 1-14 | |
| A | US 2011/112729 A1 (MARTIN MICHAEL JONATHAN [US] ET AL) 12. Mai 2011 (2011-05-12) * das ganze Dokument * ----- | 1-14 | RECHERCHIERTE SACHGEBIETE (IPC) A01F |
| A | EP 2 250 875 B1 (CNH IND BELGIUM NV [BE]) 1. Mai 2019 (2019-05-01) * das ganze Dokument * ----- | 1-14 | |
| A | US 2014/261023 A1 (SMITH KEVIN M [US] ET AL) 18. September 2014 (2014-09-18) * das ganze Dokument * ----- | 1-14 | |

Der vorliegende Recherchenbericht wurde für alle Patentansprüche erstellt

| Recherchenort | Abschlußdatum der Recherche | Prüfer |
|---|---|---|
| München | 19. September 2024 | Giorgini, Gabriele |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 2595

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2024

| Im Recherchenbericht angeführtes Patentdokument | Datum der Veröffentlichung | Mitglied(er) der Patentfamilie | Datum der Veröffentlichung |
|---|---|---|---|
| US 2023363317 A1 | 16-11-2023 | KEINE | |
| US 2023354751 A1 | 09-11-2023 | EP 4272541 A1<br>US 2023354751 A1<br>US 2023359214 A1 | 08-11-2023<br>09-11-2023<br>09-11-2023 |
| US 2014373737 A1 | 25-12-2014 | US 2014373737 A1<br>WO 2013096959 A2 | 25-12-2014<br>27-06-2013 |
| EP 2745674 B1 | 18-11-2015 | KEINE | |
| EP 4018814 A1 | 29-06-2022 | EP 4018814 A1<br>US 2022192098 A1 | 29-06-2022<br>23-06-2022 |
| US 2011112729 A1 | 12-05-2011 | EP 2319291 A1<br>US 2011112729 A1<br>US 2014058637 A1 | 11-05-2011<br>12-05-2011<br>27-02-2014 |
| EP 2250875 B1 | 01-05-2019 | EP 2250875 A2<br>US 2010288140 A1 | 17-11-2010<br>18-11-2010 |
| US 2014261023 A1 | 18-09-2014 | EP 2777383 A1<br>US 2014261023 A1<br>US 2020229351 A1 | 17-09-2014<br>18-09-2014<br>23-07-2020 |

EPO FORM P0461

Für nähere Einzelheiten zu diesem Anhang : siehe Amtsblatt des Europäischen Patentamts, Nr.12/82